# EUROPÄISCHE PATENTSCHRIFT

(11) **EP 0 987 102 B1**
(45) Veröffentlichungstag und Bekanntmachung des Hinweises auf die Patenterteilung: **26.03.2003**
(21) Anmeldenummer: 99115059.0
(22) Anmeldetag: 04.08.1999
(51) Int. Cl.: B32B 27/08, B32B 21/08, A47B 96/20, B32B 27/32

(54) **Mehrschichtige thermoverformbare Möbelkunststoffverbundfolie oder damit hergestellte Möbelteile sowie Verfahren zur Herstellung der Möbelkunststoffverbundfolie**
Thermoformable laminated plastic sheet for furniture, or furniture part made therefrom, and process of production
Feuille stratifiée thermoformable en plastique pour meubles, ou élément de meuble fabriqué à partir de celle-ci et méthode de fabrication

(30) Priorität: 19.09.1998 DE 19843029; 14.07.1999 DE 19932835
(43) Veröffentlichungstag der Anmeldung: 22.03.2000
(73) Patentinhaber: ALKOR GMBH KUNSTSTOFFE, D-81451 München (DE)
(72) Erfinder: Schneider, Manfred, Dipl.-Ing. (FH), 86928 Hagenheim-Hofstetten (DE); Ewald, Egon, 81671 München (DE)

(56) Entgegenhaltungen:
- EP-A- 0 522 240
- EP-A- 0 704 482

## Beschreibung

Die vorliegende Erfindung betrifft eine mehrschichtige thermoverformbare Möbel-Kunststoffverbundfolie oder damit hergestellte Möbelteile, ein Verfahren zur Herstellung und die Verwendung der Folie.

Die Folie enthält mindestens eine 100 bis 500 µm dicke Polyolefin- oder polyolefinhaltige Unterschicht (2) oder Unterfolie, die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator sowie die üblichen Verarbeitungshilfsmittel (Antioxidantien, Phosphite, Gleitmittel) enthält, mindestens eine Zwischenschicht in Form von mindestens einer Primer-, Haftschicht (3 und/oder 9) oder Haftfolie und darüber unmittelbar oder über eine vollflächig oder teilflächig angeordnete Druckschicht, Farbschicht oder Farbdruckschicht (7) und unmittelbar darauf oder über eine Haftschicht (4) angeordnet mindestens eine polyesterhaltige ein- oder mehrschichtige Schicht (5 und/oder 6) oder Folie, wobei unterhalb der Unterfolie oder Unterschicht mindestens eine Haftschicht, Haftvermittlerschicht oder Reaktantschicht (1) (werkstoffseitig) angeordnet ist. Gemäß der Erfindung weisen die Zwischenschichten, die polyesterhaltigen Schichten oder Folien eine bestimmte Zusammensetzung bzw. einen bestimmten Aufbau auf.

EP 070482 offenbart eine mehrschichtige Möbel-Kunststoffverbundfolie, die bei Temperaturen von mindestens 90°C, bevorzugt bei 100-180°C durch Thermoverformung verarbeikt werden kann.

Aus der EP 0 522 240 B1 ist bereits eine mehrschichtige Kunststoffverbundfolie bekannt, enthaltend mindestens eine Unterschicht oder Unterfolie auf der Basis mindestens eines Polyolefins, mindestens eine unterhalb der Unterfolie oder Unterschicht angeordnete Haftschicht, Haftfolie, Haftvermittlerschicht und/oder Reaktantschicht und mindestens oberhalb der Unterschicht oder Unterfolie angeordnete obere Schicht oder Folie. Gemäß der EP 0522240 ist auf der 60 bis 700 µm dicken Polyolefin- oder polyolefinhaltigen Unterschicht oder Unterfolie, die bezogen auf 100 Gew.-Teile Polyolefin 5 bis 150 Gew.-Teile mindestens eines anorganischen-chemischen und/oder organischen-chemischen Füllstoffes, Pigmentes oder Füllstoff-Pigment-Gemisches und mindestens einen UV-Stabilisator und/oder einen Thermostabilisator und/oder ein Antioxidans enthält, mindestens eine Zwischenschicht in Form mindestens einer Primer-Haftschicht oder Haftfolie und darüber mindestens eine vollflächig oder teilflächig angeordnete Druckschicht, Farbschicht oder Farbdruckschicht und unmittelbar darauf oder über eine oder mehrere Zwischenschicht(en) mindestens eine Polymethylmethyacrylat-, Polyamid- und/oder polyesterhaltige ein- oder mehrschichtige Schutzschicht oder Schutzfolie angeordnet. Die Folie ist für den Außenbereich und auch als Möbelfolie anwendbar. Die Thermoverformbarkeit ist jedoch nur bei sehr hohen Temperaturen (150 °C) möglich, außerdem ist das Verarbeitungsfenster sehr eng (± 2,5 °C).

Ziel und Aufgabe der vorliegenden Erfindung war es, eine verbesserte Kunststoffverbundfolie für Möbel zu erzielen, sie sollte u. a. eine gute Thermoverformbarkeit schon bei niedrigen Temperaturen (100 °C) und ein wesentlich erweitertes Verarbeitungsfenster (90 bis 130 °C) aufweisen. Zusätzlich sollte die Folie verbesserte Oberflächeneigenschaften (Kratzfestigkeit, Chemikalienbeständigkeit) sowie gute Haftungseigenschaften auf Holzwerkstoffen, Holzteilen, auf Gipskarton oder Metall besitzen.

Erfindungsgemäß wurde festgestellt, daß diesen Zielen und Aufgaben eine mehrschichtige thermoverformbare Möbel-Kunsttoffverbundfolie oder damit hergestellte Möbelteile gerecht wird bzw.werden, enthaltend mindestens eine 100 bis 500 µm dicke Polyolefin- oder polyolefinhaltige Unterschicht (2) oder Unterfolie, die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator und/oder Thermostabilisator und/oder Antioxidans enthält, mindestens eine Zwischenschicht in Form von mindestens einer Primer-, Haftschicht (3) oder Haftfolie (9) bzw. Haftschicht und darüber unmittelbar oder über eine vollflächig oder teilflächig angeordnete Druckschicht, Farbschicht oder Farbdruckschicht (7) und unmittelbar darauf oder über eine Haftschicht (4) angeordnet mindestens eine polyesterhaltige ein- oder mehrschichtige Schicht (5 und/oder 6) oder Folie, wobei unterhalb der Unterfolie oder UnterSchicht (2) mindestens eine Haftschicht, Haftvermittlerschicht oder Reaktantschicht (1) (werkstoffseitig) angeordnet ist.

Gemäß der Erfindung weist die polyolefinhaltige Unterschicht oder Unterfolie (2) mindestens ein Propylencopolymerisat mit mittlerem oder hohem Ethylengehalt, vorzugsweise ein Random-Copolymerisat, und/oder ein Propylenterpolymerisat (a) auf, das bzw. die einen Vicat-Erweichungspunkt VST/A/50 zwischen 110 und 130 °C sowie einen Schmelzindex MFI (230/2,16) von 1 bis 10 g/10 min besitzt bzw. besitzen.

Weiterhin enthält die Unterschicht oder Unterfolie (2) mindestens ein Polyethylen (b), vorzugsweise LDPE, LLDPE, VLDPE und/oder VLLDPE sowie mindestens ein Polyethylen-Elastomer oder polyethylenhaltiges Elastomer (c) oder die Unterfolie besteht bezogen auf Kunststoff aus diesen Bestandteilen. Weiterhin ist die Möbel-Kunststoffverbundfolie dadurch gekennzeichnet, daß sie eine oder mehrere Polyester- oder polyesterhaltige(n) Schicht(en) oder Folie(n) (5, 6) enthält oder daraus besteht, von denen mindestens eine Polyesterschicht oder polyesterhaltige Schicht oder Folie (5) ein amorphes Polyester enthält oder daraus besteht, wobei mindestens eine oder die gesamte Polyester- oder polyesterhaltige Schicht oder Folie (5 und/oder 6) einen Vicat-Erweichungspunkt VST/A/50 zwischen 60 und 90 °C aufweist. Oberhalb der Polyester- oder polyesterhaltigen Schicht oder Folie (5 und/oder 6) ist eine Lackschicht (8) angeordnet.

Nach einer bevorzugten Ausführungsform der Erfindung ist das Polyethylen-Elastomer oder polyethylenhaltige Elastomer (c) ein buten-, hexen- oder octenhaltiges oder buten-, hexenoder octenmodifiziertes Polyethylen-Elastomer oder polyethylenhaltiges Elastomer, das einen Schmelzindex MFI (190/2,16) von 3 bis 8 g/10 min aufweist. Das buten-, hexen- oder octenhaltige oder buten-, hexen- oder octenmodifizierte Polyethylenelastomer oder polyethylenhaltige Elastomer weist nach einer besonders zweckmäßigen Ausführungsform einen Buten-, Hexen- oder Octengehalt von 10 bis 35 Gew.-%, vorzugsweise 20 bis 30 Gew.-%, (bezogen auf 100 Gew.-Teile Elastomer) auf.

Bevorzugt ist in der Unterfolie oder Unterschicht (2) als LDPE, LLDPE, VLDPE und/oder VLLDPE (b) ein octenhaltiges oder octenmodifiziertes LDPE, LLDPE, VLDPE und/oder VLLDPE vorzugsweise ein octenhaltiges oder octenmodifiziertes LLDPE, enthalten.

Die vorgenannte Ausführungsform weist den Vorteil auf, daß die Thermoverformbarkeit von Polyolefinen bereits in Bereichen von 90 bis 110 °C möglich wird, vergleichbar mit PVC-Hartfolien.

Nach einer bevorzugten Ausführungsform enthält die polyolefinhaltige Unterschicht oder Unterfolie (2) 35 bis 65 Gew.-Teile, vorzugsweise 45 bis 55 Gew.-Teile, Propylencound/oder -terpolymerisat (a) und 20 bis 40 Gew.-Teile, vorzugsweise 25 bis 35 Gew.-Teile, buten- hexen- oder octenhaltiges oder buten-, hexen- oder octenmodifiziertes Polyethylen-Elastomer (c) oder polyethylenhaltiges Elastomer sowie 10 bis 30 Gew-Teile, vorzugsweise 15 bis 25 Gew.-Teile, LDPE, LLDPE, VLDPE und/oder VLLDPE mit einem MFI (190/2,16) von 2,5 bis 7,5 g/10 min, vorzugsweise LLDPE, als Kunststoffbestandteile oder besteht daraus.

Nach einer weiteren Ausführungsform werden bis zu 60 Gew.-%, vorzugsweise bis zu 20 Gew.-%, (bezogen auf LDPE, LLDPE, VLDPE und/oder VLLDPE) der Unterfolie oder Unterschicht (2) durch die gleiche Gewichtsmenge von Polyvinylalkohol, Ethylen-Vinylalkohol-Mischpolymerisat (Copolymerisat), Ethylen-Acrylsäureester-Acrylsäureesterpolymerisat (EAA) oder Polycaprolacton oder Mischungen bzw. Legierungen von LLDPE, LDPE, VLDPE und/oder VLLDPE mit einem oder mehreren der vorgenannten Polymerisate, Co- oder Terpolymerisate ersetzt.

In der Unterfolie sind weiterhin 0 bis 70 Gew.-Teile, vorzugsweise 0 bis 50 Gew.-Teile, besonders bevorzugt 40 bis 50 Gew.-Teile Füllstoffe, (bezogen auf 100 Gew.-Teile Polymer) in der Unterschicht oder Unterfolie (2) enthalten. Nach einer weiteren bevorzugten Ausführungsform ist kein Füllstoff in der Unterschicht oder Unterfolie oder ein Füllstoffgehalt unter 10 Gew.-Teilen enthalten.

Zwischen der polyolefinhaltigen Unterschicht oder Unterfolie (2) und der Polyesterschicht oder polyesterhaltigen Schicht oder Folie (5 und/oder 6) ist weiterhin vorzugsweise eine Haftvermittlerschicht (9) angeordnet, die vorzugsweise einen Schmelzindex MFI (190/2,16) von 3 g/10 min bis 7 g/10 min aufweist. Besonders bevorzugt enthält die Unterfolie oder Unterschicht E/GMA (Ethylen-Glycidylmethacrylat-Copolymerisat) und/oder E/MA/GMA (Ethylen-Methacrylat-Glycidylmethacrylat-Terpolymerisat), vorzugsweise mit einem Schmelzindex MFI (190/2,16) von 3,5 bis 6 g/10 min, oder besteht daraus. Hierbei setzt sich E/GMA-Copolymerisat vorzugsweise aus 8 Gew.-% Glycidylmethacrylat und 92 Gew.-% Ethylen zusammen, wohingegen sich E/MA/GMA-Terpolymerisat vorzugsweise aus 21 bis 27 Gew.-% Methacrylat, 71 Gew.-% Ethylen und 2 bis 8 Gew.-% Glycidylmethacrylat zusammensetzt. Die Polyesterschicht oder polyesterhaltige Schicht oder Folie (5, 6) liegt bevorzugt nach einer Ausführungsform zusammen mit der Haftvermittlerschicht im coextrudierten Zustand vor.

Nach einer anderen bevorzugten Ausführungsform beträgt der Ethylengehalt des Propylencopolymerisates, vorzugsweise Random-Propylen-Copolymerisat, in der Unterfolie (2) typischerweise 2 bis 8 Gew.-%, vorzugsweise 2 bis 6 Gew.-%, besonders bevorzugt 2,5 bis 3,5 Gew.-%, bezogen auf das Propylencopolymerisat.

Der Vicat-Erweichungspunkt VST/A/50 mindestens einer oder der gesamten Unterschicht(en oder -folie(n) (2) beträgt 60 bis 90 °C und/oder der Schmelzindex des Propylencopolymerisates MFI (230/2,16) beträgt 2 bis 8 g/10 min, vorzugsweise 3 bis 7 g/10 min. Dadurch wird erreicht, daß die Thermoverformbarkeit von Polyolefinen bereits in Bereichen von 90 bis 110 °C möglich wird, vergleichbar mit PVC-Hartfolien, und daß eine gute homogene Mischung erzielt wird, die überall konstante Folieneigenschaften garantiert.

Gemäß der Erfindung ist an der Unterseite der Unterfolie oder Unterschicht mindestens eine wasserlösliche, wasseranlösbare oder wasserunlösliche füllstoffhaltige Haftschicht, Haftvermittlerschicht und/oder eine Reaktantschicht (1) angeordnet, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlöslichen Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

Nach einer weiteren bevorzugten Ausführungsform enthält die unterhalb der Unterfolie oder Unterschicht (2) angeordnete Reaktantschicht (1) einen wasserlöslichen, wasserdispergierbaren oder wasseranlösbaren Kunststoff und mindestens eine wasserlösliche oder wasserdispergierbare reaktionsfähige Verbindung, vorzugsweise mindestens eine organischchemische Säure, ein Säureanhydrid und/oder eine sauer reagierende Verbindung. Diese Schicht verbessert z. B. in Kombination mit einem Zwei- oder Mehrkomponentenkleber oder einem duromeren Kleber die Haftung der Klebeschicht.

Nach einer anderen bevorzugten Ausfürungsform enthält die wasserlösliche Reaktantschicht (1) als wasserlösliches Kunstharz ein wasserlösliches Acrylathomo-, -co-, -terpolymerisat und/oder ein wasserlösliches Methacrylathomo-, -co-, -terpolymerisat und/oder als Säure, Säureanhydrid oder sauer reagierende Verbindung mindestens eine wasserlösliche organische Di- und/oder Polycarbonsäure und/oder deren Anhydride, oder sauer reagierende Verbindung, vorzugsweise Maleinsäure, Maleinsäureanhydrid, eine wasserlösliche, ein Schwefelatom enthaltende organische Säure, eine Sulfonsäure, deren Derivate oder Ester, vorzugsweise Paratoluolsulfonsäure, und/oder eine Polysulfonsäure oder ein Gemisch von zwei oder mehreren dieser Verbindungen, oder besteht aus der Kombination eines oder mehrerer dieser wasserlöslichen Kunstharze und einer oder mehrerer dieser wasserlöslichen Säuren, Säureanhydride oder sauer reagierende Verbindungen.

Über der Druckschicht, Farbschicht oder Farbdruckschicht (7) und/oder unter der Polyester- oder polyesterhaltigen Folie oder Schicht (5 und/oder 6) ist weiterhin mindestens eine Haftschicht, Haftvermittlerschicht (4) als Zwischenschicht angeordnet, die transparent und füllstoffarm (weniger als 3 Gew.-% Füllstoffe, vorzugsweise weniger als 1,5 Gew.-% Füllstoffe) oder füllstofffrei ist.

Vorzugsweise enthält die Haftschicht, Haftvermittlerschicht (4) ein Polyurethan, ein Polyisocyanat, ein Vinylchloridhomo-, -co- oder -terpolymerisat und/oder Polyvinylacetat und/oder ein Vinylchlorid-Vinylacetat-Copolymerisat (PVC-PVA-Copolymerisat) oder ein Gemisch von zwei oder mehreren dieser Kunststoffe als Bindemittel.

Die oberhalb der Unterfolie oder Unterschicht (2) der Kunststoffolie angeordnete Kunststoff- oder Kunstharzschicht oder -haftvermittlerschicht (3) enthält nach einer Ausführungsform ein Reaktionsprodukt aus einem vernetzbaren OH-gruppenhaltigen Polyacrylat in Kombination mit einem Polyisocyanat, vorzugsweise Hexamethylendiisocyanat, und/oder eine Legierung oder Mischung einer oder mehrerer dieser Verbindungen untereinander oder besteht daraus. Für die Haftschicht (3) wird bevorzugt ein OH-gruppenhaltiges Polyacrylat mit 1,5 bis 5 Gew.-% OH-Gruppen (bezogen auf das OH-gruppenhaltige Polyacrylat) verwendet oder ist in der Haftschicht enthalten und/oder das Polyisocyanat weist einen Isocyanatanteil oder -gehalt von 1 bis 5 Gew.-% (bezogen auf das ganze Reaktionsprodukt) auf oder die Haftschicht (3) ist unter Verwendung dieser Komponenten hergestellt.

Die Haftschicht (3) enthält somit zweckmäßig ein OH-gruppenhaltiges Acrylathomo-, -cound/oder -terpolymerisat, vorzugsweise in Kombination mit einem Polyisocyanat, oder ein OH-gruppenhaltiges Methacrylathomo-, -co- und/oder -terpolymerisat und ein Polyisocyanat, vorzugsweise Hexamethylendiisocyanat, und/oder eine Legierung oder Mischung einer oder mehrerer dieser Verbindungen untereinander oder besteht daraus.

Die Polyester- oder polyesterhaltige Folie(n) oder Schicht(en) (5 und/oder 6) ist bzw. sind transparent oder transluzent und enthält bzw. enthalten 0 bis 8 Gew.-% Füllstoff (bezogen auf die gesamte Polyesterschicht(en) oder -folie(n) (5 und/oder 6)), vorzugsweise keinen Füllstoff, und weist bzw. weisen eine Schichtdicke von 20 bis 250 µm, vorzugsweise 50 bis 200 µm, aufweist bzw. auf (bezogen auf die Gesamtschichtdicke von (5 und/oder 6)) und/oder mindestens eine oder die gesamte Polyester- oder polyesterhaltige Folie(n) oder Schicht(en) (5 und/oder 6) besitzt bzw. besitzen einen Vicat-Erweichungspunkt VST/A/50 zwischen 60 und 90 °C.

In einer bevorzugten Ausführung enthält das Propylen-Terpolymerisat in der Unterschicht oder Unterfolie einen Buten-, Hexen- oder Octengehalt von 2 bis 30 Gew.-%, vorzugsweise 8 bis 20 Gew.-%.

Vorzugsweise ist direkt unterhalb der Unterfolie oder Unterschicht (2) oder unterhalb der darunter angeordneten Haftschicht, Haftvermittlerschicht oder Reaktantschicht (1), ein Schmelzkleber auf Polyurethan-, Polyamid-, Polyethylen- oder Polypropylenbasis in einer Schichtdicke von 30 bis 200 µm aufgebracht.

Nach einer bevorzugten Ausführungsform besitzt der in der Unterschicht oder Unterfolie (2) in Gewichtsmengen von 0 bis 70 Gew.-Teilen vorzugsweise verwendete feinteilige mineralische Füllstoff oder das mineralische Füllstoffgemisch, vorzugsweise Calciumcarbonat, Mikrotalcum, Kaolin und/oder Kieselsäuregel und/oder mindestens eine reaktive Substanz, wobei als reaktive Substanz mindestens eine polare und unpolare Gruppen aufweisende Substanz in Gewichtsmengen von 0,5 bis 10 Gew.-%, vorzugsweise 1 bis 5 Gew.-%, (bezogen auf 100 Gewichtsteile Füllstoff und Füllstoffgemisch), die vorzugsweise auf der Oberfläche oder auf einem Teil der Oberfläche des Füllstoffes oder Füllstoffgemisches angeordnet.

Durch Zugabe von Zusatzstoffen wie zum Beispiel Stabilisatoren, Gleitmittel resultiert aufgrund der verbesserten Scherung im Verarbeitungsprozeß eine größere Homogenisierung der Mischung.

Die Erfindung betrifft weiterhin ein Verfahren zur Herstellung einer mehrschichtigen thermoverformbaren Möbel-Kunststoffverbundfolie oder damit hergestellte Möbelteile enthaltend mindestens eine 100 bis 500 µm dicke Polyolefin- oder polyolefinhaltige Unterschicht (2) oder Unterfolie, die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator und/oder Thermostabilisator und/oder Antioxidans enthält, mindestens eine Zwischenschicht in Form von mindestens einer Primer-, Haftschicht (3) oder Haftfolie (9) bzw. Haftschicht und darüber unmittelbar oder über eine vollflächig oder teilflächig angeordnete Druckschicht, Farbschicht oder Farbdruckschicht (7) und unmittelbar darauf oder über eine Haftschicht (4) angeordnet mindestens eine polyesterhaltige ein- oder mehrschichtige Schicht (5 und/oder 6) oder Folie, wobei unterhalb der Unterfolie oder Unterschicht (2) mindestens eine Haftschicht, Haftvermittlerschicht oder Reaktantschicht (1) (werkstoffseitig) angeordnet ist. Gemäß der Erfindung wird als polyolefinhaltige Unterschicht oder Unterfolie (2) eine Kunststoffmischung enthaltend oder bestehend aus mindestens einem Propylencopolymerisat (a), vorzugsweise Random-Propylencopolymerisat, mit mittleren oder hohem Ethylengehalt und/oder Propylenterpolymerisat, das oder die einen Vicat-Erweichungspunkt VST/A/50 zwischen 110 und 130 °C sowie einen Schmelzindex MFI (230/2,16) von 1 bis 10 g/10 min aufweist bzw. aufweisen, aus mindestens einem Polyethylen-Elastomer oder polyethylenhaltiges Elastomer (b), aus mindestens einem Polyethylen (c), vorzugsweise LDPE, LLDPE, VLDPE und/oder VLLDPE verwendet und daß eine oder mehrere Polyester- oder polyesterhaltige(n) Schicht(en) oder Folie(n) (5, 6) angeordnet sind, von denen mindestens in einer Polyesterschicht oder polyesterhaltigen Schicht oder Folie (5) ein amorphes Polyester enthalten ist. Dabei wird mindestens eine oder die gesamte Polyester- oder polyesterhaltige Schicht oder Folie (5, 6) auf einen Vicat-Erweichungspunkt VST/A/50 zwischen 60 und 90 °C eingestellt. Unmittelbar auf die Polyesterschicht oder polyesterhaltige Schicht oder Folie (5 und/oder 6) wird eine Lackschicht (8) aufgebracht.

Als Polyethylen-Elastomer oder polyethylenhaltiges Elastomer wird dabei ein buten-, hexenoder octenhaltiges oder buten-, hexen- oder octenmodifiziertes Polyethylen-Elastomer oder polyethylenhaltiges Elastomer in der Unterschicht oder Unterfolie (2) eingesetzt, das einen Schmelzindex MFI (190/2,16) von 3 bis 8 g/10 min aufweist.

Innerhalb des Verfahrens wird als LDPE, LLDPE, VLDPE und/oder VLLDPE ein octenhaltiges oder octenmodifiziertes LDPE, LLDPE, VLDPE und/oder VLLDPE vorzugsweise ein octenhaltiges oder octenmodifiziertes LLDPE, in der Unterschicht (2) verwendet. Als buten-, hexen- oder octenhaltiges oder buten-, hexen- oder octenmodifiziertes Polyethylen-Elastomer oder polyethylenhaltiges Elastomer wird ein solches mit einem Buten-, Hexenoder Octengehalt von 10 bis 35 Gew.-%, vorzugsweise 20 bis 30 Gew.-%, (bezogen auf 100 Gew.Teile Elastomer) eingesetzt.

Nach dem erfindungsgemäßen Verfahren wird bzw. werden die polyolefinhaltige Unterschicht(en) oder Unterfolie(n) (2) enthaltend oder bestehend aus einer Mischung (als Kunstharzbindemittel) von 35 bis 65 Gew.-Teile, vorzugsweise 45 bis 55 Gew.-Teile, Propylencopolymerisat und/oder Propylenterpolymerisat und 20 bis 40 Gew.-Teile, vorzugsweise 25 bis 35 Gew.-Teile, buten-, hexen- oder octenhaltiges oder buten-, hexen- oder octenmodifiziertes Polyethylen- oder polyethylenhaltiges Elastomer sowie 10 bis 30 Gew.-Teile, vorzugsweise 15 bis 25 Gew.-Teile, LDPE, LLDPE, VLDPE und/oder VLLDPE mit einem MFI (190/2,16) von 2,5 bis 7,5 g/10 min, vorzugsweise LLDPE, unter vorheriger Einstellung des Vicat-Erweichungspunktes VST/A/50 mindestens einer oder der gesamten Unterschicht(en) oder Folie(n) (2) auf 70 bis 80 °C und/oder der Auswahl des Schmelzindex des Propylencopolymerisates MFI (230 °/2,16) auf 2 bis 8 g/10 min, vorzugsweise 3,1 bis 6 g/10 min, extrudiert und/oder coextrudiert und/oder kalandriert.

Die Vereinigung der Polyester- oder polyesterhaltigen Schicht(en) oder Folie(n), vorzugsweise der Schichten oder Folien (5 und/oder 6), mit der polyolefinhaltigen Unterfolie oder Unterschicht (2) und gegebenenfalls (einer) darüber oder dazwischen angeordneten Schicht(en) oder Folie(n) (1, 3 und/oder 9 oder 4) wird bevorzugt durch Kaschieren und/oder Prägen bei Temperaturen von 100 bis 190 °C, vorzugsweise 110 bis 180 °C, oder durch Mehrschichtextrusion bei Massetemperaturen von 230 bis 270 °C durchgeführt.

Vorzugsweise wird die Ober- und/oder Unterseite der Unterschicht(en) oder Unterfolie(n) vor Aufbringung der Haftschicht oder Haftvermittlerschicht oder Reaktantschicht (1,3) einer Oberflächenbehandlung zur Aktivierung der Oberfläche unterworfen. Als Oberflächenbehandlung wird eine Corona-Behandlung, Fluorierung, Plasma-Behandlung oder Flammenbehandlung bevorzugt.

Gemäß der Erfindung dient das Verfahren zur Herstellung von Möbelteilen. Dabei wird die mehrschichtige Möbelfolie im Thermoformverfahren bei Temperaturen von 80 bis 140 °C, vorzugsweise 85 bis 120 °C, besonders bevorzugt 90 bis 110 °C, auf die vorgefertigten Holz- oder Holzwerkstoffteile, Holz- oder Holzwerkstoff- oder Holzfasern enthaltenden Platten mit der unterhalb der Unterfolie oder Unterschicht (2) angeordneten Haftschicht, Haftvermittlerschicht oder Reaktantschicht (1) entweder mittels des nach Anspruch 17 aufgebrachten Schmelzklebers oder unter Verwendung eines Klebstoffes oder Leimes, vorzugsweise unter Verwendung eines 2-Komponenten-Klebstoffes oder Leimes (PUR), aufgebracht und mit den Holz- oder Holzwerkstoffteilen oder -platten verbunden.

Nach einer bevorzugten Ausführungsform wird die Kunststoffverbundfolie während der Herstellung oder danach geprägt oder mindestens eine oder mehrere der oberen Schichten oder Folien der Verbundfolie und/oder mit der Lackschicht oder Schutzschicht mit einer Prägung versehen.

Die Erfindung betrifft weiterhin die Verwendung der mehrschichtigen Möbelfolien, wobei die Möbelfolien mindestens folgenden Aufbau oder Zusammensetzung enthalten:
eine 100 bis 500 µm dicke Polyolefin- oder polyolefinhaltige Unterschicht oder Unterfolie (2), die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator und/oder Thermostabilisator und/oder Antioxidans enthält, mindestens
eine Zwischenschicht (3 und/oder 9) in Form mindestens einer Primer-, Haftschicht oder Haftfolie und darüber
mindestens eine vollflächig oder teilflächig angeordnete Druckschicht, Farbschicht oder Farbdruckschicht (7) und unmittelbar darauf oder über eine oder mehrere Haftschicht(en) (4) angeordnet
mindestens eine polyesterhaltige ein- oder mehrschichtige Schicht (5 und/oder 6) oder Folie, wobei unterhalb der Unterfolie oder Unterschicht (2) eine Haftschicht, Haftvermittlerschicht oder Reaktantschicht (1) (ausgerichtet zum werkstoffseitigen Holz bzw. zur klebstoffbeschichteten Holzseite) angeordnet ist. Diese Möbelfolie wird zur Herstellung von mit Dekorgestaltungen versehenen Möbelteilen, die zur Dekorgestaltung auf mindestens einer Fläche, vorzugsweise Front- oder Seitendekorfläche oder -platte mit Erhöhungen und/oder Vertiefungen oder Ausfräsungen versehen sind, verwendet, wobei die Möbelfolie folgenden Aufbau oder die folgende Zusammensetzung enthält:
mindestens eine polyolefinhaltige Unterschicht oder Unterfolie (2), die mindestens drei Kunststoffe enthält, ausgewählt aus den Gruppen
   a) mindestens ein Propylencopolymerisat, vorzugsweise Random-Propylen-Copolymerisat, mit einem mittleren oder hohen Ethylengehalt und/oder ein Propylenterpolymerisat, das bzw. die einen Vicat-Erweichungspunkt VST/A/50 zwischen 110 und 130 °C sowie einen Schmelzindex MFI (230/2,16) von 1 bis 10 g/min besitzt bzw. besitzen, und
   b) mindestens ein Polyethylen, vorzugsweise LDPE, LLDPE, VLDPE und/oder VLLDPE, sowie
   c) mindestens ein Polyethylen-Elastomer oder polyethylenhaltiges Elastomer,
wobei mindestens eine oder die gesamte Unterschicht(en) oder Unterfolie(n) (2) einen Vicat-Erweichungspunkt VST/A/50 zwischen 60 und 90 °C aufweist bzw. aufweisen und daß eine oder mehrere Polyester- oder polyesterhaltigen Schicht(en) oder Folie(n) (5, 6) angeordnet werden, von denen mindestens eine Polyesterschicht oder polyesterhaltige Schicht(en) oder Folie(n) (5) ein amorphes Polyester enthält oder daraus besteht und mindestens eine oder die gesamte Polyester- oder polyesterhaltige Folie oder Schicht (5 und/oder 6) einen Vicat-Erweichungspunkt VST/A/50 zwischen 60 und 90 °C aufweist bzw. aufweisen.

Die erfindungsgemäße Folie kann als Beschichtung für Holz-, Holzwerkstoff-Teile oder platten, Gipskarton, Metall, Metallteile oder -platten verwendet werden.

In einer weiteren Verwendung dient die Folie zur Herstellung von Türbeschichtungen, Laminatfußböden, Phonogehäusen, Wandpaneelen oder dergleichen.

Im Rahmen der vorliegenden Erfindung werden bevorzugt folgende Verfahren durchgeführt:

### Verfahrensbeispiele (V):

V1
   a) Schichten (2, 9, 5, 6, 5) werden coextrudiert und nachfolgend wird der Verbund geprägt, vorzugsweise in einem Arbeitsgang gleichzeitig geprägt.
   b) Anschließend wird das Coextrudat (2, 9, 5, 6, 5) in einem Arbeitsgang lackiert (8) und die Rückseite geprimert (1), was vorzugsweise in einem Arbeitsgang durchgeführt wird.
V2
   a) Schichten (2, 9, 5) werden coextrudiert und nachfolgend wird der Verbund geprägt, vorzugsweise in einem Arbeitsgang gleichzeitig geprägt.
   b) Anschließend wird das Coextrudat (2, 9, 5) lackiert (8) und die Rückseite geprimert (1), was auch in einem Arbeitsgang durchgeführt werden kann.
V3
   a) Schichten (5, 6, 5) werden coextrudiert und in einem zweiten Arbeitsgang lackiert.
   b) Die kalandrierte oder extrudierte Unterfolie (2) wird auf der Rückseite mit Schicht (1) und auf der Vorderseite mit Schicht (3) und Schicht (4), vorzugsweise innerhalb eines Arbeitsganges, versehen.
   c) Kaschieren von (a) und (b) und Prägen in einem Arbeitsgang.
V4
   a) Schicht (5) wird extrudiert und in einem zweiten Arbeitsgang lackiert (8).
   b) wie V3 (b).
   c) wie V3 (c).
V5
   a) Oberfolie (5) wird extrudiert und in einem zweiten Arbeitsgang anschließend lackiert (8).
   b) Die kalandrierte oder extrudierte Unterfolie (2) wird mit Schicht (1), Schicht (3), Druckschicht (7) und Haftschicht (4) in einem Arbeitsgang versehen.
   c) Kaschieren von (a) und (b) und Prägen in einem Arbeitsgang.
V6
   a) Schichten (5, 6, 5) werden coextrudiert und in einem zweiten Arbeitsgang anschließend lackiert (8).
   b) Die kalandrierte oder extrudierte Unterfolie (2) wird mit Schicht (1), Schicht (3) und Druckschicht (7) in einem Arbeitsgang versehen.
   c) Kaschieren von (a) und (b) und Prägen in einem Arbeitsgang.

### Beispiel 1 Uni-Folie coextrudiert

1. Haftschicht bestehend aus linearem PUR, Polyisocyanat, Füllstoffen, Hilfsstoffe
2. PO-Unterschicht bestehend aus

| | | |
|---|---|---|
| 60 Teile | PP-Random-Copolymerisat | MFI (230/216) - 4,0 g/10 min |
| 20 Teile | LLDPE | MFI (190/2,16) - 2,5 g/10 min |
| 20 Teile | PE-Elastomer (POE) | MFI (190/2,16) - 5,0 g/10 min |

9. Haftschicht bestehend aus

| | |
|---|---|
| E/GMA (Ethylen-Glycidylmethacrylat Copolymer) | MFI (190/216) - 5,0 g/10 min |

5. Schicht bestehend aus

| | |
|---|---|
| amorphem Polyester (PETG): | 40 Gew.-% Polyethylenterephthalat und 60 Gew.-% Cyclohexandimethanol (CHDM) |

6. Schicht bestehend aus
teilkristallinem durch Einsatz von Comonomeren wie z.B. Isophthalsäure (IPA), Cyclohexandimethanol (CHDM), Diethylenglykol (DEG) oder Naphthalindicarboxylat (NDC) modifizierten Polyester (A-PET)
8. Lackschicht bestehend aus
2-Komponenten-PUR-Lack Schichten 2, 9, 5, 6, 5 werden coextrudiert

Hierbei und in den folgenden Beispielen bedeutet POE Polyethylen-Elastomer oder polyethylenhaltiges Elastomer und kann vorzugsweise als Ethylen-Octen-, Ethylen-Hexen- und/oder Ethylen-Buten-Copolymer vorliegen.

### Beispiel 2 Uni-Folie coextrudiert

1. Haftschicht bestehend aus
linearem PUR, Polyisocyanat, Füllstoffen, Hilfsstoffen
2. PO Unterschicht bestehend aus:

| | | |
|---|---|---|
| 60 Teile | PP-Random-Copolymerisat | MFI (230/216) - 4,0 g/10 min |
| 20 Teile | LLDPE | MFI (190/2,16) - 2,5 g/10 min |
| 20 Teile | PE-Elastomer (POE) | MFI (190/2,16) - 5,0 g/10 min |

9. Haftschicht bestehend aus

| | |
|---|---|
| EVA (28 % VA) + MAH (3 %) | MFI (190/2,16) - 6,0 g/10 min |

Ethylenvinylacetat (EVA) + Maleinsäureanhydrid (MAH) als Terpolymerisat
5. Schicht bestehend aus

| | |
|---|---|
| amorphem Polyester (PETG): | 40 Gew.-% Polyethylenterephthalat und 60 Gew.-% Cyclohexandimethanol (CHDM) |

8. Lackschicht bestehend aus

| | |
|---|---|
| UV-Lack | (Mischung aus Monomer-Prepolymer-Acrylate, UV-Initiatoren, Hilfsstoffe, Mattienmgsmittel) |

Schichten 2, 9, 5 werden coextrudiert

### Beispiel 3 Uni-Folie kaschiert

1. Haftschicht bestehend aus: linearem PU, Polyisocyanat, Füllstoffen, Hilfsstoffen
2. Unterschicht bestehend aus

| | | |
|---|---|---|
| 65 Teile | PP-Random-Copolymerisat | MFI (230/2,16) - 6,0 g/10 min |
| 20 Teile | LLDPE | MFI (190/2,16) - 3,0 g/10 min |
| 15 Teile | PE Elastomer (POE) | MFI (190/2,16) - 5,0 g/10 min |

3. Haftschicht bestehend aus OH-gruppenhaltigem Polyacrylat, Polyisocyanat, Füllstoffen, Hilfsstoffen
4. Haftschicht bestehend aus
PVC-PVA-Copolymerisat
(40 % Vinylacetat- und 60 % Vinylchlorid-Gehalt)
5. bestehend aus

| | |
|---|---|
| amorphem Polyester (PETG) | 40 Gew.-% Polyethylenterephthalat und 60 Gew.-% Cyclohexandimethanol (CHDM) |

6. Schicht bestehend aus
teilkristallinem modifiziertem Polyester (A-PET)
8. Lackschicht bestehend aus
OH-gruppenhaltigem Polyacrylat, Polyisocyanat, Mattierungsmittel, Hilfsstoffen Schichten 5,6, 5 werden coextrudiert

### Beispiel 4 Wie Beispiel 3, jedoch Oberschicht (5) einschichtig aus PETG und Schicht (4) aus einer PUR-HV-ähnlicher Schicht (1)

### Beispiel 5 Bedruckte Folie

1. Haftschicht bestehend aus
linearem PUR, Polyisocyanat, Füllstoffen, Hilfsstoffen
2. PO-Unterschicht bestehend aus

| | | |
|---|---|---|
| 50 Teilen | PP-Random Copolymer | MFI (230/2,16) - 5,0 g/10 min |
| 20 Teilen | LLDPE | MFI (190/2,16)-3,5 g/10 min |
| 30 Teilen | PE-Elastomer (POE) | MFI (190/2,16) - 5,0 g/10 min |

3. Haftschicht bestehend aus
OH-gruppenhaltigem Polyacrylat, Polyisocyanat, Siliciumdioxyd, Hilfsstoffe
7. Druckschichten bestehend aus
Acrylatbindemittel und Pigmenten
4. Haftschicht bestehend aus
linearem nichtvernetzbarem PUR, PVC-Copolymer, Polyisocyanat, Füllstoffen, Hilfsstoffen
5. Deckschicht bestehend aus

| | |
|---|---|
| amorphem Polyester (PETG): | 40 Gew.-% Polyethylenterephthalat und 60 Gew.-% Cyclohexandimethanol (CHDM) |

8. Lackschicht bestehend aus
2-Komponenten-PUR-Lack

### Beispiel 6 Bedruckte Folie

Wie Beispiel 5, jedoch mit coextrudierter Deckschicht (5, 6, 5) bestehend aus
5. Schicht bestehend aus

| | |
|---|---|
| amorphem Polyester (PETG) | 40 Gew.-% Polyethylenterephthalat und 60 Gew.-% Cyclohexandimethanol (CHDM) |

6. Schicht bestehend aus
teilkristallinem modifizierten Polyester (A-PET)
7. Druckschicht bestehend aus
PVC-Bindemittel und Pigmenten
8. Lackschicht bestehend aus
OH-gruppenhaltigem Polyacrylat, Polyisocyanat, Mattierungsmittel, Hilfsstoffen

Bei allen vorgenannten Beispielen lagen die Werte für den Ethylengehalt (des PP-Random-Copolymerisates (a)), die Octengehalte für (b) und die Octen-, Hexen- oder Butengehalte für (c) als Bestandteile der Unterfolie oder Unterschicht), für die Vicat-Erweichungspunkte sowie andere Werte innerhalb der in der Beschreibung genannten Werte bzw. Parameter.

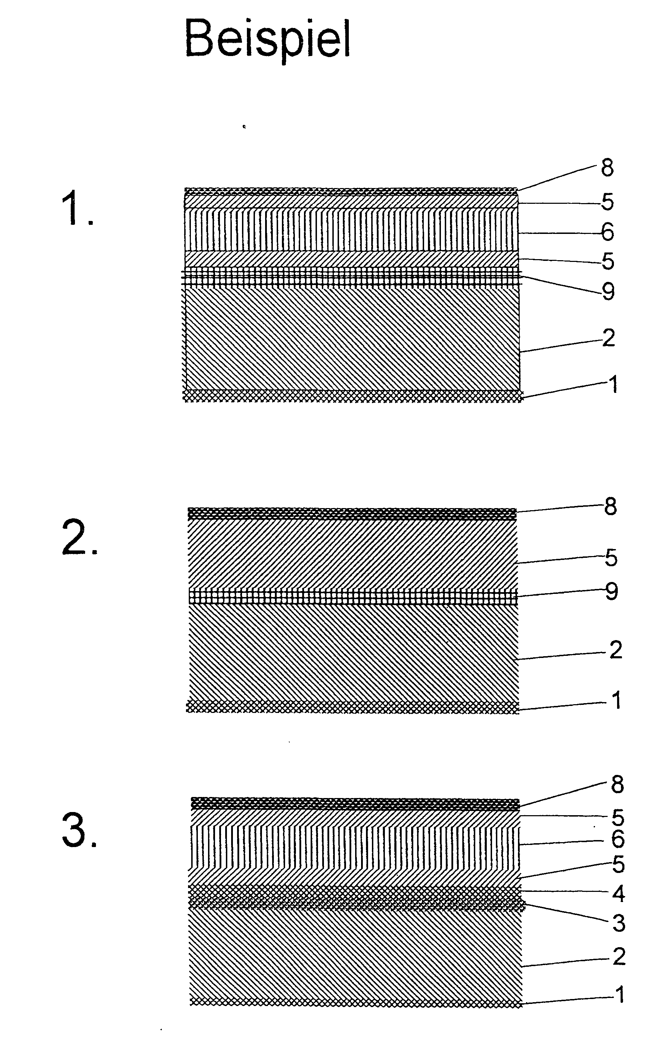

Die Figuren 1 bis 6 stellen eine schematische Darstellung der Erfindung dar, die in ihrer Zusammensetzung auch durch die Beispiele erörtert sind. Die Figuren zeigen Querschnitte durch die erfindungsgemäße Folie.

Die mehrschichtige Folie, vorzugsweise thermoverformbare Möbel-Kunststoffverbundfolie, enthält mindestens die Polyolefin- oder polyolefinhaltige Unterschicht (2) oder Unterfolie, die Zwischenschicht in Form von mindestens einer Primer-, Haftschicht (3) oder Haftfolie (9) bzw. Haftschicht und darüber unmittelbar oder über eine vollflächig oder teilflächig angeordnete Druckschicht, Farbschicht oder Farbdruckschicht (7) und unmittelbar darauf oder über eine Haftschicht (4) angeordnet mindestens eine polyesterhaltige ein- oder mehrschichtige Schicht (5 und/oder 6) oder Folie.

Unterhalb der Unterfolie oder Unterschicht (2) ist bei allen Figuren 1 bis 6 mindestens eine Haftschicht, Haftvermittlerschicht oder Reaktantschicht (1) (werkstoffseitig) angeordnet.

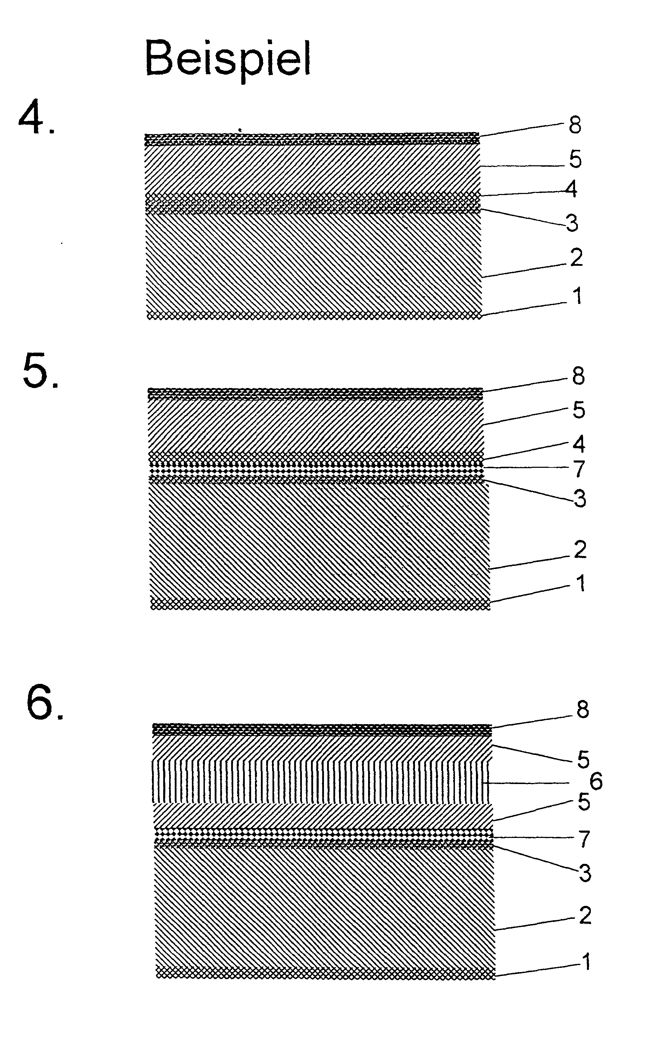

In den Figuren 1 und 2 sind unterhalb der Unterfolie (2) die Haftschicht, Haftvermittlerschicht oder Reaktantschicht (1) und oberhalb der Unterfolie (2) die Haftschicht oder Haftfolie (9) angeordnet. Gemäß Figur 2 ist darüber die Polyesterschicht - amorpher Polyester - und unmittelbar darauf die Lackschicht (8) angeordnet, während bei Figur 1 oberhalb der Haftschicht (9) und der Schicht aus amorphem Polyester (5) die weiteren Polyesterschichten (6) und (5) und erst nachfolgend die Lackschicht (8) angeordnet ist.

Die Ausführungsform der Figuren 1 bis 4 zeigen Verbundfolien ohne die Farbdruckschicht (7), die bei dem Folienaufbau gemäß Figuren 5 und 6 ersichtlich sind.

Bei den Figuren 3 und 4 sind oberhalb der Unterfolie (2) die Haftschicht(en) (3) und (4) angeordnet, während sich bei den Ausführungsformen gemäß Figuren 5 und 6 oberhalb der Haftschicht (3) die Farbdruckschicht (7) befindet.

Gemäß Figur 5 sind oberhalb der Farbdruckschicht (7) die Haftschicht (4), die Polyesterschicht (5) und die Lackschicht (8) angeordnet, während nach Figur 6 auf der Farbdruckschicht (7) unmittelbar die Polyesterschichten (5), (6) und (5) folgen und darauf die Lackschicht (8) angeordnet ist.

## Patentansprüche

1. Mehrschichtige thermoverformbare Möbel-Kunststoffverbundfolie oder damit hergestellte Möbelteile enthaltend mindestens eine
100 bis 500 µm dicke Polyolefin- oder polyolefinhaltige Unterschicht (2) oder Unterfolie, die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator und/oder Thermostabilisator und/oder Antioxidans enthält, mindestens
eine Zwischenschicht in Form von mindestens einer Primer-, Haftschicht (3) oder Haftfolie (9) bzw. Haftschicht und darüber unmittelbar oder über
eine vollflächig oder teilflächig angeordnete Druckschicht, Farbschicht oder Farbdruckschicht (7) und unmittelbar darauf oder über eine Haftschicht (4) angeordnet
mindestens eine polyesterhaltige ein- oder mehrschichtige Schicht (5 und/oder 6) oder Folie, wobei
unterhalb der Unterfolie oder Unterschicht mindestens eine Haftschicht, Haftvermittlerschicht oder Reaktantschicht (1), die werkstoffseitig angeordnet ist,
**dadurch gekennzeichnet, daß**
die polyolefinhaltige Unterschicht oder Unterfolie (2)
(a) mindestens ein Propylencopolymerisat mit mittlerem oder hohem Ethylengehalt, vorzugsweise Random-Propylencopolymerisat, und/oder ein Propylenterpolymerisat aufweist, das bzw. die einen Vicat-Erweichungspunkt VST/A/50 zwischen 110 und 130 °C sowie einen Schmelzindex MFI (230/2,16) von 1 bis 10 g/10 min besitzt bzw. besitzen, und
(b) mindestens ein Polyethylen, vorzugsweise LDPE, LLDPE, VLDPE und/oder VLLDPE, sowie
(c) mindestens ein Polyethylen-Elastomer oder polyethylenhaltiges Elastomer enthält,
daß eine oder mehrere Polyester- oder polyesterhaltige(n) Schicht(en) oder Folie(n) (5, 6) angeordnet sind, von denen mindestens eine Polyesterschicht oder polyesterhaltige Schicht(en) oder Folie(n) (5) ein amorphes Polyester enthält oder daraus besteht und mindestens eine oder die gesamte Polyester- oder polyesterhaltige Schicht oder Folie einen Vicat-Erweichungspunkt VST/A/50 zwischen 60 und 90 °C aufweist und daß oberhalb der Polyester- oder polyesterhaltigen Schicht oder Folie (5 und/oder 6) eine Lackschicht (8) angeordnet ist.

2. Mehrschichtige thermoverformbare Möbelfolie nach Anspruch 1, **dadurch gekennzeichnet, daß** das Polyethylen-Elastomer oder polyethylenhaltige Elastomer ein buten-, hexen- oder octenhaltiges oder buten-, hexen- oder octenmodifiziertes Polyethylen-Elastomer oder polyethylenhaltiges Elastomer ist, das einen Schmelzindex MFI (190/2,16) von 3 bis 8 g/10 min aufweist.

3. Mehrschichtige thermoverformbare Möbelfolie nach Ansprüchen 1 und 2, **dadurch gekennzeichnet, daß** als LDPE, LLDPE, VLDPE und/oder VLLDPE ein octenhaltiges oder octenmodifiziertes LDPE, LLDPE, VLDPE und/oder VLLDPE, vorzugsweise ein octenhaltiges oder octenmodifiziertes LLDPE, in der Unterschicht (2) enthalten ist.

4. Mehrschichtige thermoverformbare Möbelfolie nach Ansprüchen 1 und 2, **dadurch gekennzeichnet, daß** das buten-, hexen- oder octenhaltige oder buten-, hexen- oder octenmodifizierte Polyethylen-Elastomer oder polyethylenhaltige Elastomer einen Buten-, Hexen- oder Octengehalt von
10 bis 35 Gew.-%, vorzugsweise
20 bis 30 Gew.-%,
(bezogen auf 100 Gew.-Teile Elastomer) aufweist.

5. Mehrschichtige thermoverformbare Möbelfolie nach einem oder mehreren der Ansprüche 1 bis 4, **dadurch gekennzeichnet, daß** die polyolefinhaltige Unterschicht oder Unterfolie (2)
35 bis 65 Gew.-Teile, vorzugsweise
45 bis 55 Gew.-Teile,
Random-Propylenco- und/oder Propylenterpolymerisat (a) und
20 bis 40 Gew.-Teile, vorzugsweise
25 bis 35 Gew.-Teile,
buten-, hexen- oder octenhaltiges oder buten-, hexen- oder octenmodifiziertes Polyethylen-Elastomer oder polyethylenhaltiges Elastomer (c) sowie
10 bis 30 Gew.-Teile, vorzugsweise
15 bis 25 Gew.-Teile,
LDPE, LLDPE, VLDPE und/oder VLLDPE (b) mit einem MFI (190/2,16) von 2,5 bis 7,5 g/10 min, vorzugsweise LLDPE, als Kunststoffbestandteile enthält oder daraus besteht.

6. Mehrschichtige thermoverformbare Möbelfolie nach einem oder mehreren der Ansprüche 1 bis 5, **dadurch gekennzeichnet, daß**, bezogen auf 100 Gew.-Teile Polymer, 0 bis 70 Gew.-Teile, vorzugsweise 0 bis 50 Gew.-Teile, besonders bevorzugt 40 bis 50 Gew.-Teile Füllstoff, in der Unterschicht oder Unterfolie (2) enthalten sind.

7. Mehrschichtige thermoverformbare Möbelfolie nach einem oder mehreren der Ansprüche 1 bis 6, **dadurch gekennzeichnet, daß** zwischen der polyolefinhaltigen Unterschicht oder Unterfolie (2) und der Polyesterschicht oder polyesterhaltigen Schicht(en) oder Folie(n) (5 und/oder 6) eine Haftschicht bzw. Haftfolie (9) angeordnet ist, die aus einem Acrylat oder Methacrylat, vorzugsweise E/GMA (Ethylen-Glycidylmethacrylat-Copolymerisat) und/oder E/MA/GMA (Ethylen-Methacrylat-Glycidylmethacrylat-Terpolymerisat), vorzugsweise mit einem Schmelzindex MFI (190/2,16) von 3 bis 7 g/10 min, enthält oder daraus besteht, wobei die Polyesterschicht oder polyesterhaltige Schicht oder Folie (5, 6) zusammen mit der Haftschicht oder Haftfolie (9) im coextrudierten Zustand vorliegt.

8. Mehrschichtige thermoverformbare Möbelfolie nach einem oder mehreren der Ansprüche 1 bis 7, **dadurch gekennzeichnet, daß** der Ethylengehalt des Propylencopolymerisates, vorzugsweise Random-Propylen-Copolymerisat, in der Unterfolie (2) 2 bis 8 Gew.-%, bezogen auf das Propylencopolymerisat, beträgt,

9. Mehrschichtige thermoverformbare Möbelfolie nach einem oder mehreren der Ansprüche 1 bis 8, **dadurch gekennzeichnet, daß** der Vicat-Erweichungspunkt VST/A/50 mindestens einer oder der gesamten Unterschicht(en) oder -folie(n) (2) 60 bis 90 °C und/oder der Schmelzindex MFI (230/2,16) des Propylencopolymerisates (a) der Unterschicht (2) 2 bis 8 g/10 min, vorzugsweise 3,1 bis 6 g/10 min, beträgt.

10. Mehrschichtige thermoverformbare Möbelfolie nach einem oder mehreren der Ansprüche 1 bis 9, **dadurch gekennzeichnet, daß** an der Unterseite der Unterfolie oder Unterschicht (2) mindestens eine wasserlösliche, wasseranlösbare oder wassenunlösliche füllstoffhaltige Haftschicht, Haftvermittlerschicht und/oder eine Reaktantschicht (1) angeordnet ist, die im Fall der wasserlöslichen oder wasseranlösbaren Haft- oder Reaktantschicht neben einem Bindemittel ein mit der aufzubringenden Klebeschicht reagierendes Mittel oder ein wasserlösliches kationisches Polymeres, vorzugsweise Polyimin, enthält oder im Fall einer wasserunlöslichen oder wasserschwerlöslichen Haftschicht oder Haftvermittlerschicht ein polare Gruppen enthaltendes wasserschwer- oder wasserunlösliches Kunstharz oder einen polare Gruppen enthaltenden Kunststoff, vorzugsweise mindestens ein Polyacrylat, Polyester, Polyurethan und/oder ein Polyisocyanat, enthält oder daraus besteht.

11. Mehrschichtige thermoverformbare Möbelfolie nach einem oder mehreren der Ansprüche 1 bis 10, **dadurch gekennzeichnet, daß** über der Druckschicht, Farbschicht oder Farbdruckschicht (7) und/oder unter der Polyester- oder polyesterhaltigen Folie(n) oder Schicht(en) (5 und/oder 6) mindestens eine Haftschicht, Haftvermittlerschicht oder Haftfolie (4, 9) als Zwischenschicht angeordnet ist, die transparent und füllstoffarm (weniger als 3 Gew.-% Füllstoffe, vorzugsweise weniger als 1,5 Gew.-% Füllstoffe) oder füllstoffrei ist.

12. Mehrschichtige thermoverformbare Möbelfolie nach einem oder mehreren der Ansprüche 1 bis 11, **dadurch gekennzeichnet, daß** die oberhalb der Unterfolie oder Unterschicht (2) der Kunststoffolie angeordnete Kunststoff- oder Kunstharzschicht oder -haftvermittlerschicht (3) ein Reaktionsprodukt aus einem vernetzbaren OH-gruppenhaltigen Polyacrylat in Kombination mit einem Polyisocyanat, vorzugsweise Hexamethylendiisocyanat, und/oder eine Legierung oder Mischung einer oder mehrerer dieser Verbindungen untereinander enthält oder daraus besteht.

13. Mehrschichtige thermoveformbare Möbelfolie nach einem oder mehreren der Ansprüche 1 bis 12, **dadurch gekennzeichnet, daß** für die Haftschicht (3) ein OH-gruppenhaltiges Polyacrylat mit 1,5 bis 5 Gew.-% OH-Gruppen (bezogen auf das OH-gruppenhaltige Polyacrylat) verwendet wird bzw. in der Haftschicht enthalten ist und/oder daß das Polyisocyanat einen Isocyanatanteil oder -gehalt von 1 bis 5 Gew.-% (bezogen auf das ganze Reaktionsprodukt) aufweist oder daß die Haftschicht (3) unter Verwendung dieser Komponenten hergestellt ist.

14. Mehrschichtige thermoverformbare Möbelfolie nach einem oder mehreren der Ansprüche 1 bis 13, **dadurch gekennzeichnet, daß** die Polyester- oder polyesterhaltige Folie(n) oder Schicht(en) (5 und/oder 6) transparent oder transluzent ist bzw. sind, 0 bis 8 Gew.-% Füllstoff (bezogen auf die gesamte Polyesterschicht oder -folie (5 und/oder 6)), vorzugsweise keinen Füllstoff, enthalten und eine Schichtdicke von 20 bis 250 µm, vorzugsweise 50 bis 200 µm aufweist bzw. aufweisen (bezogen auf die Gesamtschichtdicke von (5 und/oder 6)) und/oder mindestens eine oder die gesamte Polyester- oder polyesterhaltige Folie oder Schicht (5 und/oder 6) einen Vicat-Erweichungspunkt VST/A/50 zwischen 60 und 90 °C aufweist bzw. aufweisen.

15. Mehrschichtige thermoverformbare Möbelfolie nach einem oder mehreren der Ansprüche 1 bis 14, **dadurch gekennzeichnet, daß** die Haftschicht, Haftvermittlerschicht (4) ein Polyurethan (PUR), ein Polyisocyanat, ein Vinylchloridhomo-, -co- oder -terpolymerisat und/oder Polyvinylacetat und/oder ein Vinylchlorid-Vmylacetat-Copolymerisat (PVC-PVA-Copolymerisat) oder ein Gemisch von zwei oder mehreren dieser Kunststoffe als Bindemittel enthält.

16. Mehrschichtige thermoverformbare Möbelfolie nach einem oder mehreren der Ansprüche 1 bis 15, **dadurch gekennzeichnet, daß** die Unterschicht oder Unterfolie (2) ein Propylenterpolymerisat mit einem Buten-, Hexen oder Octengehalt von 2 bis 30 Gew.-%, vorzugsweise 8 bis 20 Gew.-%, enthält.

17. Kunststoffolie nach einem oder mehreren der Ansprüche 1 bis 16, **dadurch gekennzeichnet, daß** entweder direkt unterhalb der Unterfolie oder Unterschicht (2) oder unterhalb der darunter angeordneten Haftschicht, Haftvermittlerschicht oder Reaktantschicht (1), ein Schmelzkleber auf Polyurethan-, Polyamid-, Polyethylenoder Polypropylenbasis in einer Schichtdicke von 30 bis 200 µm aufgebracht ist.

18. Verfahren zur Herstellung einer mehrschichtigen thermoverformbaren Möbel-Kunststoffverbundfolie oder damit hergestellte Möbelteile enthaltend mindestens eine 100 bis 500 µm dicke Polyolefin- oder polyolefinhaltige Unterschicht (2) oder Unterfolie, die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator sowie die üblichen Verarbeitungshilfsmittel und/oder Thermostabilisator und/oder Antioxidans enthält, mindestens eine Zwischenschicht in Form von mindestens einer Primer-, Haftschicht (3) oder Haftfolie (9) bzw. Haftschicht und darüber unmittelbar oder über eine vollflächig oder teilflächig angeordnete Druckschicht, Farbschicht oder Farbdruckschicht (7) und unmittelbar darauf oder über eine Haftschicht (4) angeordnet, mindestens eine polyesterhaltige ein- oder mehrschichtige Schicht (5 und/oder 6) oder Folie, wobei unterhalb der Unterfolie oder Unterschicht mindestens eine Haftschicht, Haftvermittlerschicht oder Reaktantschicht (1) (werkstoffseitig) angeordnet ist, **dadurch gekennzeichnet, daß** als polyolefinhaltige Unterschicht oder Unterfolie (2) eine Kunststoffmischung enthaltend oder bestehend aus
(a) mindestens einem Propylencopolymerisat mit mittleren oder hohem Ethylengehalt, vorzugsweise Random-Propylen-copolymerisat und/oder ein Propylenterpolymerisat aufweist, das bzw. die einen Vicat-Erweichungspunkt VST/A/50 zwischen 110 und 130 °C sowie einen Schmelzindex MFI (230/2,16) von 1 bis 10 g/10 min besitzt bzw. besitzen, und
(b) mindestens einem Polyethylen, vorzugsweise LDPE, LLDPE, VLDPE und/oder VLLDPE,
(c) mindestens einem Polyethylen-Elastomer oder polyethylenhaltigen Elastomer
verwendet wird und daß eine oder mehrere Polyester- oder polyesterhaltige(n) Schicht(en) oder Folie(n) (5, 6) angeordnet werden, von denen mindestens in einer Polyesterschicht oder polyesterhaltigen Schicht oder Folie (5) ein amorphes Polyester eingesetzt wird und wobei mindestens eine oder die gesamte Polyester- oder polyesterhaltige Schicht oder Folie auf einen Vicat-Erweichungspunkt VST/A/50 zwischen 60 und 90 °C eingestellt wird und daß unmittelbar auf die Polyesterschicht oder polyesterhaltige Schicht oder Folie (5 und/oder 6) eine Lackschicht (8) aufgebracht wird,

19. Verfahren nach Anspruch 18, **dadurch gekennzeichnet, daß** als Polyethylen-Elastomer oder polyethylenhaltiges Elastomer ein buten-, hexen- oder octenhaltiges oder buten-, hexen- oder octenmodifiziertes Polyethylen-Elastomer oder polyethylenhaltiges Elastomer in der Unterschicht oder Unterfolie (2) eingesetzt wird, das einen Schmelzindex MFI (190/2,16) von 3 bis 8 g/10 min aufweist.

20. Verfahren nach Ansprüchen 18 und/oder 19, **dadurch gekennzeichnet, daß** das LDPE, LLDPE, VLDPE und/oder VLLDPE ein octenhaltiges oder octenmodifiziertes LDPE, LLDPE, VLDPE und/oder VLLDPE, vorzugsweise ein octenhaltiges oder octenmodifiziertes LLDPE, in der Unterschicht (2) verwendet wird und daß als buten-, hexenoder octenhaltiges oder buten-, hexen- oder octenmodifiziertes Polyethylen-Elastomer oder ein polyethylenhaltiges Elastomer mit einem Buten-, Hexen- oder Octengehalt von 10 bis 35 Gew.-%, vorzugsweise 20 bis 30 Gew.-%, (bezogen auf 100 Gew.-Teile Elastomer) eingesetzt wird.

21. Verfahren nach einem oder mehreren der Ansprüche 18 bis 20, **dadurch gekennzeichnet, daß** die polyolefinhaltige(n) Unterschicht(en) oder Unterfolie(n) (2) enthaltend oder bestehend aus einer Mischung (als Kunstharzbindemittel) von 35 bis 65 Gew.-Teile, vorzugsweise 45 bis 55 Gew.-Teile, Propylencopolymerisat und/oder Propylenterpolymerisat (a) und 20 bis 40 Gew.-Teile, vorzugsweise 25 bis 35 Gew.-Teile, buten-, hexen- oder octenhaltiges oder buten-, hexen- oder octenmodifiziertes Polyethylen- oder polyethylenhaltiges Elastomer (c) sowie 10 bis 30 Gew.-Teile, vorzugsweise 15 bis 25 Gew.-Teile, LDPE, LLDPE, VLDPE und/oder VLLDPE (b) mit einem MFI (190/2,16) von 2,5 bis 7,5 g/10 min, vorzugsweise LLDPE, unter vorheriger Einstellung des Vicat-Erweichungspunktes VST/A/50 mindestens einer oder der gesamten Unterschicht(en) oder Folie(n) (2) auf 70 bis 80 °C und/oder der Auswahl des Schmelzindex des Propylencopolymerisates MFI (230 °/2,16) auf 2 bis 8 g/10 min extrudiert und/oder coextrudiert wird bzw. werden.

22. Verfahren nach einem oder mehreren der Ansprüche 18 bis 21, **dadurch gekennzeichnet, daß** die Vereinigung der Polyester- oder polyesterhaltigen Schicht(en) oder Folie(n), vorzugsweise der Schichten oder Folien (5 und/oder 6), mit der polyolefinhaltigen Unterfolie oder Unterschicht (2) und gegebenenfalls (einer) darüber, darunter oder dazwischen angeordneten Schicht(en) oder Folie(n) (1, 7, 3 und/oder 9 oder 4), durch Kaschieren und/oder Prägen bei Temperaturen von 100 bis 190 °C, vorzugsweise 110 bis 180 °C, oder durch Mehrschichtextrusion bei Massetemperaturen von 230 bis 270 °C durchgeführt wird.

23. Verfahren nach einem der Ansprüche 18 bis 22, **dadurch gekennzeichnet, daß** die Ober- und/oder Unterseite der Unterschicht(en) oder Unterfolie(n) vor Aufbringen der Haftschicht oder Haftvermittlerschicht oder Reaktantschicht (1,3) einer Oberflächenbehandlung zur Aktivierung der Oberfläche unterworfen wird.

24. Verfahren nach Anspruch 23, **dadurch gekennzeichnet, daß** die Oberflächenbehandlung in Form einer Corona-Behandlung, Fluorierung, Plasma-Behandlung oder Flammenbehandlung durchgeführt wird.

25. Verfahren zur Herstellung der Möbelteile unter Verwendung der mehrschichtigen Möbelfolie nach einem oder mehreren der Ansprüche 18 bis 24, **dadurch gekennzeichnet, daß** die mehrschichtige Möbelfolie im Thermoformverfahren bei Temperaturen von 80 bis 140 °C, vorzugsweise 85 bis 120 °C, besonders bevorzugt 90 bis 110 °C, auf die vorgefertigten Holz- oder Holzwerkstoffteile, Holz- oder Holzwerkstoffoder Holzfasern enthaltenden Platten mit der der unterhalb der Unterfolie oder Unterschicht (2) angeordneten Haftschicht, Haftvermittlerschicht oder Reaktantschicht (1) entweder mittels des nach Anspruch 17 aufgebrachten Schmelzklebers oder unter Verwendung eines Klebstoffes oder Leimes, vorzugsweise unter Verwendung eines 2-Komponenten-Klebstoffes oder Leimes (PUR), aufgebracht und mit den Holz- oder Holzwerkstoffteilen oder -platten verbunden wird.

26. Verwendung der mehrschichtigen Möbelfolien, wobei die Möbelfolien mindestens folgenden Aufbau oder Zusammensetzung enthalten:
eine 100 bis 500 µm dicke Polyolefin- oder polyolefinhaltige Unterschicht oder Unterfolie (2), die bezogen auf 100 Gewichtsteile Polyolefin 0 bis 90 Gewichtsteile mindestens eines anorganisch-chemischen und/oder organisch-chemischen Füllstoffes, Pigmentes oder Füllstoff-Pigment-Gemisches und mindestens einen UV-Stabilisator und/oder Thermostabilisator und/oder Antioxidans enthält, mindestens
eine Zwischenschicht (3 und/oder 9) in Form mindestens einer Primer-, Haftschicht oder Haftfolie und darüber
mindestens eine vollflächig oder teilflächig angeordnete Druckschicht, Farbschicht oder Farbdruckschicht (7) und unmittelbar darauf oder über eine oder mehrere Haftschicht(en) oder Haftfolie(n) (4, 9) angeordnet
mindestens eine polyesterhaltige ein- oder mehrschichtige Schicht (5 und/oder 6) oder Folie, wobei unterhalb der Unterfolie oder Unterschicht (2) eine Haftschicht, Haftvermittlerschicht oder Reaktantschicht (1), die ausgerichtet zum werkstoffseitigen Holz bzw. zur klebstoffbeschichteten Holzseite, angeordnet ist, nach einem oder mehreren der Ansprüche 1 bis 15, **dadurch gekennzeichnet, daß** eine Möbelfolie zur Herstellung von mit Dekorgestaltungen versehenen Möbelteilen oder Möbeln, die zur Dekorgestaltung auf mindestens einer Fläche, vorzugsweise Front- oder Seitendekorfläche oder -platte, mit Erhöhungen und oder Vertiefungen oder Ausfräsungen versehen sind, verwendet wird, wobei die Möbelfolie folgenden Aufbau oder die folgende Zusammensetzung enthält
mindestens eine polyolefinhaltige Unterschicht oder Unterfolie (2), die mindestens drei Kunststoffe enthält, ausgewählt aus den Gruppen
a) mindestens ein Propylencopolymerisat, vorzugsweise Random-Propylen-copolymerisat, mit einem mittleren oder hohen Ethylengehalt, und/oder ein Propylenterpolymerisat, das bzw. die einen Vicat-Erweichungspunkt VST/A/50 zwischen 110 und 130 °C sowie einen Schmelzindex MFI (230/2,16) von 1 bis 10 g/min besitzt bzw. besitzen, und
b) mindestens ein Polyethylen, vorzugsweise LDPE, LLDPE, VLDPE und/oder VLLDPE sowie
c) mindestens ein Polyethylenelastomer oder polyethylenhaltiges Elastomer enthält,
daß mindestens eine oder die gesamte Unterschicht(en) oder Unterfolie(n) (2) einen Vicat-Erweichungspunkt VST/A/50 zwischen 60 und 90 °C aufweist bzw. aufweisen und daß eine oder mehrere Polyester- oder polyesterhaltige(n) Schicht(en) oder Folie(n) (5, 6) angeordnet werden, von denen die Polyester- oder polyesterhaltige(n) Schicht(en) oder Folie(n) (5) ein amorphes Polyester enthält oder daraus besteht bzw. bestehen und mindestens eine oder die gesamte Polyester- oder polyesterhaltige Folie oder Schicht (5 und/oder 6) einen Vicat-Erweichungspunkt VST/A/50 zwischen 60 und 90 °C aufweist bzw. aufweisen.

27. Verwendung der mehrschichtigen Möbelfolien gemäß Ansprüchen 1 bis 17 als Beschichtung für Holz-, Holzwerkstoff-Teile oder -platten, Gipskarton, Metall, Metallteile oder -platten.

28. Verwendung der mehrschichtigen Möbelfolien gemäß Anspruch 27 zur Herstellung von Türbeschichtungen, Laminatfußböden, Phonogehäusen oder Wandpaneelen.

## Claims

1. Multilayer, thermoformable composite plastics furniture film or furniture parts produced therewith containing at least one
100 to 500 µm thick polyolefin or polyolefin-containing underlayer (2) or underfilm which contains, relative to 100 parts by weight of polyolefin, 0 to 90 parts by weight of at least one inorganic and/or organic chemical filler, pigment or filler/pigment mixture and at least one UV stabiliser and/or heat stabiliser and/or antioxidant, at least
one interlayer in the form of at least one primer/coupling layer (3) or coupling film (9) or coupling layer and arranged immediately thereover or over
a print layer, colour layer or colour print layer (7) arranged over the entire surface or a proportion thereof and immediately thereon or over a coupling layer (4)
at least one polyester-containing single or multilayer layer (5 and/or 6) or film, wherein
beneath the underfilm or underlayer there is arranged, on the material side, at least one coupling layer, bonding agent layer or reactant layer (1)
**characterised in that**
the polyolefin-containing underlayer or underfilm (2)
(a) comprises at least one propylene copolymer having a moderate or elevated ethylene content, preferably a random propylene copolymer, and/or a propylene terpolymer, which has/have a Vicat softening point, VST/A/50, of between 110 and 130°C and a melt flow index, MFI (230/2.16), of 1 to 10 g/10 min and
(b) contains at least one polyethylene, preferably LDPE, LLDPE, VLDPE and/or VLLDPE and
(c) contains at least one polyethylene elastomer or polyethylene-containing elastomer,
that one or more polyester or polyester-containing layer(s) or film(s) (5, 6) are arranged, of which at least one polyester layer or polyester-containing layer(s) or film(s) (5) contains an amorphous polyester or consists thereof and at least one or all of the polyester or polyester-containing layer(s) or film(s) has/have a Vicat softening point, VST/A/50, of between 60 and 90°C and that, above the polyester or polyester-containing layer or film (5 and/or 6), there is arranged a lacquer layer (8).

2. A multilayer, thermoformable furniture film according to claim 1, **characterised in that** the polyethylene elastomer or polyethylene-containing elastomer is a butene-, hexene- or octene-containing or butene-, hexene- or octene-modified polyethylene elastomer or polyethylene-containing elastomer which has a melt flow index, MFI (190/2.16), of 3 to 8 g/10 min.

3. A multilayer, thermoformable furniture film according to claims 1 and 2, **characterised in that** the LDPE, LLDPE, VLDPE and/or VLLDPE contained in the underlayer (2) is an octene-containing or octene-modified LDPE, LLDPE, VLDPE and/or VLLDPE, preferably an octene-containing or octene-modified LLDPE.

4. A multilayer, thermoformable furniture film according to claims 1 and 2, **characterised in that**, relative to 100 parts by weight of elastomer, the butene-, hexene-or octene-containing or butene-, hexene- or octene-modified polyethylene elastomer or polyethylene-containing elastomer has a butene, hexene or octene content of
10 to 35 wt.%, preferably
20 to 30 wt.%.

5. A multilayer, thermoformable furniture film according to one or more of claims 1 to 4, **characterised in that** the polyolefin-containing underlayer or underfilm (2) contains or consists of
35 to 65 parts by weight, preferably
45 to 55 parts by weight,
of random propylene copolymer and/or propylene terpolymer (a) and
20 to 40 parts by weight, preferably
25 to 35 parts by weight,
of butene-, hexene- or octane-containing or butene-, hexene- or octene-modified polyethylene elastomer or polyethylene-containing elastomer (c) and
10 to 30 parts by weight, preferably
15 to 25 parts by weight,
of LDPE, LLDPE, VLDPE and/or VLLDPE (b) with an MFI (190/2.16) of 2.5 to 7.5 g/10 min, preferably LLDPE, as the plastics constituents.

6. A multilayer, thermoformable furniture film according to one or more of claims 1 to 5, **characterised in that**, relative to 100 parts by weight of polymer, it contains 0 to 70 parts by weight, preferably 0 to 50 parts by weight, particularly preferably 40 to 50 parts by weight of filler, in the underlayer or underfilm (2).

7. A multilayer, thermoformable furniture film according to one or more of claims 1 to 6, **characterised in that**, between the polyolefin-containing underlayer or underfilm (2) and the polyester layer or polyester-containing layer(s) or film(s) (5 and/or 6), there is arranged a coupling layer or coupling film (9) which contains or consists of an acrylate or methacrylate, preferably E/GMA (ethylene/glycidyl methacrylate copolymer) and/or E/MA/GME (ethylene/methacrylate/glycidyl methacrylate terpolymer), preferably with a melt flow index, MFI (190/2.16), of 3 to 7 g/10 min, wherein the polyester layer or polyester-containing layer or film (5, 6) is present in the coextruded state with the coupling layer or coupling film (9).

8. A multilayer, thermoformable furniture film according to one or more of claims 1 to 7, **characterised in that** the ethylene content of the propylene copolymer, preferably random propylene copolymer, in the underfilm (2) is 2 to 8 wt.%, relative to the propylene copolymer.

9. A multilayer, thermoformable furniture film according to one or more of claims 1 to 8, **characterised in that** the Vicat softening point, VST/A/50, of at least one of or all the underlayer(s) or underfilm(s) (2) is 60 to 90°C and/or the melt flow index, MFI (230/2.16), of the propylene copolymer (a) of the underlayer (2) is 2 to 8 g/10 min, preferably 3.1 to 6 g/10 min.

10. A multilayer, thermoformable furniture film according to one or more of claims 1 to 9, **characterised in that**, on the underside of the underfilm or underlayer (2), there is arranged at least one water-soluble, partially water-soluble or water-insoluble, filler-containing coupling layer, bonding agent layer and/or a reactant layer (1), which layer, in the case of the water-soluble or partially water-soluble coupling or reactant layer, contains in addition to a binder an agent which reacts with the adhesive layer to be applied or a water-soluble cationic polymer, preferably polyimine or, in the case of a water-insoluble or sparingly water-soluble coupling layer or bonding agent layer, contains or consists of a sparingly water-soluble or water-insoluble synthetic resin containing polar groups or a plastic containing polar groups, preferably at least one polyacrylate, polyester, polyurethane and/or a polyisocyanate.

11. A multilayer, thermoformable furniture film according to one or more of claims 1 to 10, **characterised in that**, over the print layer, colour layer or colour print layer (7), and/or under the polyester or polyester-containing film(s) or layer(s) (5 and/or 6), there is arranged at least one coupling layer, bonding agent layer or coupling film (4, 9) as an interlayer, which is transparent and has a low filler content (less than 3 wt.% fillers, preferably less than 1.5 wt.% fillers) or contains no fillers.

12. A multilayer, thermoformable furniture film according to one or more of claims 1 to 11, **characterised in that** the plastics or plastics resin layer or bonding agent layer (3) arranged above the underfilm or underlayer (2) of the plastics film contains or consists of a reaction product of a crosslinkable OH group-containing polyacrylate in combination with a polyisocyanate, preferably hexamethylene diisocyanate, and/or a blend or mixture of one or more of said compounds with one another.

13. A multilayer, thermoformable furniture film according to one or more of claims 1 to 12, **characterised in that** an OH group-containing polyacrylate with 1.5 to 5 wt.% of OH groups (relative to the OH group-containing polyacrylate) is used for the coupling layer (3) or is contained in the coupling layer and/or **in that** the polyisocyanate has an isocyanate fraction or content of 1 to 5 wt.% (relative to the entire reaction product) or **in that** the coupling layer (3) is produced using said components.

14. A multilayer, thermoformable furniture film according to one or more of claims 1 to 13, **characterised in that** the polyester or polyester-containing film(s) or layer(s) (5 and/or 6) is/are transparent or translucent, contain 0 to 8 wt.% of filler (relative to the entire polyester layer or film (5 and/or 6)), preferably no filler, and has/have a layer thickness of 20 to 250 µm, preferably of 50 to 200 µm (relative to the total layer thickness of (5 and/or 6)) and/or at least one or all of the polyester or polyester-containing film(s) or layer(s) (5 and/or 6) has/have a Vicat softening point, VST/A/50, of between 60 and 90°C.

15. A multilayer, thermoformable furniture film according to one or more of claims 1 to 14, **characterised in that** the coupling layer, bonding agent layer (4) contains as binder a polyurethane (PU), a polyisocyanate, a vinyl chloride homo-, co- or terpolymer and/or polyvinyl acetate and/or a vinyl chloride/vinyl acetate copolymer (PVC/PVA copolymer) or a mixture of two or more of these plastics.

16. A multilayer, thermoformable furniture film according to one or more of claims 1 to 15, **characterised in that** the underlayer or underfilm (2) contains a propylene terpolymer with a butene, hexene or octene content of 2 to 30 wt.%, preferably of 8 to 20 wt.%.

17. A plastics film according to one of claims 1 to 16, **characterised in that**, either directly beneath the underfilm or underlayer (2) or beneath the coupling layer, bonding agent layer or reactant layer (1) arranged thereunder, a hot-melt adhesive based on polyurethane, polyamide, polyethylene or polypropylene is applied in a layer thickness of 30 to 200 µm.

18. A process for the production of a multilayer, thermoformable composite plastics furniture film or furniture parts produced therewith containing at least one 100 to 500 µm thick polyolefin or polyolefin-containing underlayer (2) or underfilm, which, relative to 100 parts by weight of polyolefin, contains 0 to 90 parts by weight of at least one inorganic and/or organic chemical filler, pigment or filler/pigment mixture and at least one UV stabiliser, together with the conventional processing auxiliaries and/or heat stabiliser and/or antioxidant, at least one interlayer in the form of at least one primer/coupling layer (3) or coupling film (9) or coupling layer and, arranged immediately thereover or over a print layer, colour layer or colour print layer (7) arranged over the entire surface or a proportion thereof and immediately thereon or over a coupling layer (4), at least one polyester-containing single or multilayer layer (5 and/or 6) or film, wherein, beneath the underfilm or underlayer, there is arranged (on the material side) at least one coupling layer, bonding agent layer or reactant layer (1), **characterised in that** the polyolefin-containing underlayer or underfilm (2) used is a plastics mixture containing or consisting of
(a) at least one propylene copolymer having a moderate or elevated ethylene content, preferably a random propylene copolymer, and/or a propylene terpolymer, which has/have a Vicat softening point, VST/A/50, of between 110 and 130°C and a melt flow index, MFI (230/2.16), of 1 to 10 g/10 min and
(b) at least one polyethylene, preferably LDPE, LLDPE, VLDPE and/or VLLDPE and
(c) at least one polyethylene elastomer or polyethylene-containing elastomer,
and that one or more polyester or polyester-containing layer(s) or film(s) (5, 6) are arranged, in at least one of which polyester layer(s) or polyester-containing layer(s) or film(s) (5) an amorphous polyester is used and wherein at least one or all of the polyester or polyester-containing layer(s) or film(s) has/have a Vicat softening point, VST/A/50, of between 60 and 90°C and that, immediately on the polyester layer or polyester-containing layer or film (5 and/or 6), there is applied a lacquer layer (8).

19. A process according to claim 18, **characterised in that** the polyethylene elastomer or polyethylene-containing elastomer used in the underlayer or underfilm (2) is a butene-, hexene- or octene-containing or butene-, hexene- or octene-modified polyethylene elastomer or polyethylene-containing elastomer which has a melt flow index, MFI (190/2.16), of 3 to 8 g/10 min.

20. A process according to claims 18 and/or 19, **characterised in that** the LDPE, LLDPE, VLDPE and/or VLLDPE used in the underlayer (2) is an octene-containing or octene-modified LDPE, LLDPE, VLDPE and/or VLLDPE, preferably an octene-containing or octene-modified LLDPE, and **in that** the butene-, hexene- or octene-containing or butene-, hexene- or octene-modified polyethylene elastomer used is a polyethylene-containing elastomer with a butene, hexene or octene content of 10 to 35 wt.%, preferably of 20 to 30 wt.% (relative to 100 parts by weight of elastomer).

21. A process according to one or more of claims 18 to 20, **characterised in that** the polyolefin-containing underlayer(s) or underfilm(s) (2) containing or consisting of a mixture (as synthetic resin binder) of 35 to 65 parts by weight, preferably 45 to 55 parts by weight, of propylene copolymer and/or propylene terpolymer (a) and 20 to 40 parts by weight, preferably 25 to 35 parts by weight, of butene-, hexene- or octene-containing or butene-, hexene- or octene-modified polyethylene or polyethylene-containing elastomer (c) together with 10 to 30 parts by weight, preferably 15 to 25 parts by weight, of LDPE, LLDPE, VLDPE and/or VLLDPE (b) with an MFI (190/2.16) of 2.5 to 7.5 g/10 min, preferably LLDPE, is/are extruded and/or coextruded with the Vicat softening point, VST/A/50, of at least one or all of the underlayer(s) or film(s) (2) having been preset to 70 to 80°C and/or the melt flow index, MFI (230°/2.16), of the propylene copolymer having been selected at 2 to 8 g/10 min.

22. A process according to one or more of claims 18 to 21, **characterised in that** the polyester or polyester-containing layer(s) or film(s), preferably the layers or films (5 and/or 6), is/are joined with the polyolefin-containing underfilm or underlayer (2) and optionally (a) layer(s) or film(s) (1, 7, 3 and/or 9 or 4) arranged thereover, thereunder or therebetween, by lamination and/or embossing at temperatures of 100 to 190°C, preferably of 110 to 180°C, or by multilayer extrusion at melt temperatures of 230 to 270°C.

23. A process according to one of claims 18 to 22, **characterised in that**, prior to application of the coupling layer or bonding agent layer or reactant layer (1, 3), the topside and/or underside of the underlayer(s) or underfilm(s) is/are subjected to surface treatment to activate the surface.

24. A process according to claim 23, **characterised in that** the surface treatment takes the form of corona treatment, fluorination, plasma treatment or flame treatment.

25. A process for the production of furniture parts using the multilayer furniture film according to one or more of claims 18 to 24, **characterised in that** the multilayer furniture film is applied by thermoforming at temperatures of 80 to 140°C, preferably of 85 to 120°C, particularly preferably of 90 to 110°C, onto the previously produced timber or derived timber product parts, timber or derived timber product- or wood fibre-containing boards with the coupling layer, bonding agent layer or reactant layer (1) arranged beneath the underfilm or underlayer (2), either by means of the hot-melt adhesive applied according to claim 17 or using an adhesive or glue, preferably using a 2-component adhesive or glue (PU) and is bonded to the timber or derived timber product parts or boards.

26. Use of the multilayer furniture films, wherein the furniture films contain at least the following structure or composition:
a 100 to 500 µm thick polyolefin or polyolefin-containing underlayer (2) or underfilm which contains, relative to 100 parts by weight of polyolefin, 0 to 90 parts by weight of at least one inorganic and/or organic chemical filler, pigment or filler/pigment mixture and at least one UV stabiliser and/or heat stabiliser and/or antioxidant, at least
one interlayer (3 and/or 9) in the form of at least one primer/coupling layer or coupling film and thereover
at least one print layer, colour layer or colour print layer (7) arranged over the entire surface or a proportion thereof and arranged immediately thereon or over one or more coupling layer(s) or coupling film(s) (4, 9)
at least one polyester-containing single or multilayer layer (5 and/or 6) or film, wherein, beneath the underfilm or underlayer (2), there is arranged, facing towards the material side of the timber or towards the adhesive-coated side of the timber, a coupling layer, bonding agent layer or reactant layer (1), according to one or more of claims 1 to 15, **characterised in that** a furniture film is used for the production of furniture parts or furniture provided with decorative features, which furniture parts or furniture are provided with raised and/or recessed or routed portions for decorative purposes on at least one surface, preferably the front or side decorative surface or sheet, wherein the furniture film contains the following structure or the following composition
at least one polyolefin-containing underlayer or underfilm (2), which contains at least three plastics selected from the groups
a) at least one propylene copolymer, preferably a random propylene copolymer, having a moderate or elevated ethylene content, and/or a propylene terpolymer, which has/have a Vicat softening point, VST/A/50, of between 110 and 130°C and a melt flow index, MFI (230/2.16), of 1 to 10 g/10 min and
b) at least one polyethylene, preferably LDPE, LLDPE, VLDPE and/or VLLDPE and
c) at least one polyethylene elastomer or polyethylene-containing elastomer,
**in that** at least one or all of the underlayer(s) or underfilm(s) (2) has/have a Vicat softening point, VST/A/50, of between 60 and 90°C and **in that** one or more polyester or polyester-containing layer(s) or film(s) (5, 6) are arranged, of which the polyester or polyester-containing layer(s) or film(s) (5) contain(s) or consist(s) of an amorphous polyester and at least one or all of the polyester or polyester-containing film(s) or layer(s) (5 and/or 6) has/have a Vicat softening point, VST/A/50, of between 60 and 90°C.

27. Use of the multilayer furniture films according to claims 1 to 17 as a coating for timber, derived timber product parts or boards, plaster board, metal, metal parts of sheets.

28. Use of the multilayer furniture films according to claim 27 for the production of door coatings, laminate flooring, audio housings or wall panels.

## Revendications

1. Feuille stratifiée thermoformable en plastique pour meubles, ou éléments de meuble fabriqués à partir de celle-ci, comprenant au moins
une couche inférieure (2) ou feuille inférieure en polyoléfine ou contenant de la polyoléfine de 100 à 500 µm d'épaisseur, qui contient 0 à 90 parties en poids, par rapport à 100 parties en poids de polyoléfine, au moins d'une matière de charge inorganique et/ou organique, d'un pigment ou d'un mélange charge/pigment et au moins un stabilisateur UV et/ou un thermostabilisateur et/ou un antioxydant, au moins
une couche intermédiaire sous la forme d'au moins une couche primaire, couche adhésive (3) ou feuille adhésive (9), resp. couche adhésive, et, placée directement au-dessus de celle-ci ou par l'entremise
d'une couche d'impression, d'une couche couleur ou d'une couche d'impression couleur (7) déposée sur la totalité ou sur une partie de la surface, et directement au-dessus de celle-ci ou au-dessus d'une couche adhésive (4) est déposée
au moins une couche (5 et/ou 6) ou feuille à une ou plusieurs couches contenant du polyester,
au-dessous de la feuille inférieure ou couche inférieure étant prévue au moins une couche adhésive, couche d'accrochage ou couche réactive (1) placée du côté du matériau,
**caractérisée en ce que** la couche inférieure ou feuille inférieure (2) contenant de la polyoléfine comprend
(a) au moins un copolymère de propylène avec une teneur moyenne ou élevée en éthylène, de préférence un copolymère de propylène aléatoire, et/ou un terpolymère de propylène, qui possède(nt) un point de ramollissement de Vicat VST/A/50 compris entre 110 et 130°C ainsi qu'un indice de fluidité à chaud MFI (230/2,16) de 1 à 10 g/10 min, et contient
(b) au moins un polyéthylène, de préférence LDPE, LLDPE, VLDPE et/ou VLLDPE, ainsi que
(c) au moins un élastomère de polyéthylène ou contenant du polyéthylène,
**en ce qu'**une ou plusieurs couches ou feuilles (5, 6) en polyester ou contenant du polyester sont prévues, parmi lesquelles au moins une couche ou feuille (5) en polyester où contenant du polyester contient un polyester amorphe ou en est constituée et au moins une ou l'ensemble des couches ou feuilles en polyester ou contenant du polyester possède un point de ramollissement de Vicat VST/A/50 compris entre 60 et 90°C, et **en ce qu'**une couche de vernis (8) est placée au-dessus de la couche ou feuille (5 et/ou 6) en polyester ou contenant du polyester.

2. Feuille stratifiée thermoformable pour meubles selon la revendication 1, **caractérisée en ce que** l'élastomère de polyéthylène ou contenant du polyéthylène est un élastomère de polyéthylène ou contenant du polyéthylène contenant du butène, de l'hexène ou de l'octène ou modifié avec du butène, de l'hexène ou de l'octène, qui possède un indice de fluidité à chaud MFI (190/2,16) de 3 à 8 g/10 min.

3. Feuille stratifiée thermoformable pour meubles selon les revendications 1 et 2, **caractérisée en ce qu'**il est contenu comme LDPE, LLDPE, VLDPE et/ou VLLDPE dans la couche inférieure (2) un LDPE, LLDPE, VLDPE et/ou VLLDPE contenant de l'octène ou modifié avec de l'octène, de préférence un LLDPE contenant de l'octène ou modifié avec de l'octène.

4. Feuille stratifiée thermoformable pour meubles selon les revendications 1 et 2, **caractérisée en ce que** l'élastomère de polyéthylène ou contenant du polyéthylène contenant du butène, de l'hexène ou de l'octène ou modifié avec du butène, de l'hexène ou de l'octène a une teneur en butène, hexène ou octène de
10 à 35 % en poids, de préférence
20 à 30 % en poids
(par rapport à 100 parties en poids d'élastomère).

5. Feuille stratifiée thermoformable pour meubles selon l'une ou plusieurs des revendications 1 à 4, **caractérisée en ce que** la couche inférieure ou feuille inférieure (2) contenant de la polyoléfine contient ou est composée de
35 à 65 parties en poids, de préférence
45 à 55 parties en poids
de copolymère et/ou terpolymère de propylène aléatoire (a) et de
20 à 40 parties en poids, de préférence
25 à 35 parties en poids
d'élastomère de polyéthylène ou d'élastomère contenant du polyéthylène (c) contenant du butène, de l'hexène ou de l'octène ou modifié avec du butène, de l'hexène ou de l'octène ainsi que de
10 à 30 parties en poids, de préférence
15 à 25 parties en poids
de LDPE, LLDPE, VLDPE et/ou VLLDPE (b) avec un MFI (190/2,16) de 2,5 à 7,5 g/10 min, de préférence LLDPE, comme composants plastiques.

6. Feuille stratifiée thermoformable pour meubles selon l'une ou plusieurs des revendications 1 à 5, **caractérisée en ce qu'**il est contenu dans la couche inférieure ou feuille inférieure (2), par rapport à 100 parties en poids de polymère, 0 à 70 parties en poids, de préférence 0 à 50 parties en poids et de manière particulièrement préférée 40 à 50 parties en poids de matière de charge.

7. Feuille stratifiée thermoformable pour meubles selon l'une ou plusieurs des revendications 1 à 6, **caractérisée en ce qu'**il est placé entre la couche inférieure ou feuille inférieure (2) contenant de la polyoléfine et la ou les couches ou feuilles (5 et/ou 6) en polyester ou contenant du polyester une couche adhésive ou feuille adhésive (9) qui contient ou est composée d'un acrylate ou méthacrylate, de préférence E/GMA (copolymère d'éthylène et méthacrylate de glycidyfe et/ou E/MA/GMA (terpolymère d'éthylène et de méthacrylate de glycidyle), de préférence avec un indice de fluidité à chaud MFI (190/2,16) de 3 à 7 g/10 min), la couche en polyester ou couche ou feuille (5, 6) contenant du polyester se présentant avec la couche adhésive ou feuille adhésive (9) à l'état coextrudé.

8. Feuille stratifiée thermoformable pour meubles selon l'une ou plusieurs des revendications 1 à 7, **caractérisée en ce que** la teneur en éthylène du copolymère de propylène, de préférence copolymère de propylène aléatoire, dans la feuille inférieure (2) est de 2 à 8 % en poids par rapport au copolymère de propylène.

9. Feuille stratifiée thermoformable pour meubles selon l'une ou plusieurs des revendications 1 à 8, **caractérisée en ce que** le point de ramollissement de Vicat VST/A/50 d'une au moins ou de l'ensemble des couches ou feuilles inférieures (2) est de 60 à 90°C et/ou l'indice de fluidité à chaud MFI (230/2,16) du copolymère de propylène (a) de la couche inférieure (2) de 2 à 8 g/10 min, de préférence 3,1 à 6 g/10 min.

10. Feuille stratifiée thermoformable pour meubles selon l'une ou plusieurs des revendications 1 à 9, **caractérisée en ce qu'**il est placé sur la face inférieure de la feuille inférieure ou couche inférieure (2) au moins une couche adhésive, une couche d'accrochage et/ou une couche réactive (1) soluble dans l'eau, corrodable dans l'eau ou insoluble dans l'eau, qui contient dans le cas de la couche adhésive ou réactive soluble dans l'eau ou corrodable dans l'eau, outre un liant, un agent réagissant avec la couche adhésive à appliquer ou un polymère cationique soluble dans l'eau, de préférence de la polyimine, ou qui contient ou est composée dans le cas d'une couche adhésive ou couche réactive insoluble dans l'eau ou peu soluble dans l'eau, une résine synthétique peu ou insoluble dans l'eau contenant des groupes polaires ou une matière plastique contenant des groupes polaires, de préférence au moins un polyacrylate, un polyester, un polyuréthane et/ou un polyisocyanate.

11. Feuille stratifiée thermoformable pour meubles selon l'une ou plusieurs des revendications 1 à 10, **caractérisée en ce qu'**il est placé au-dessus de la couche d'impression, la couche couleur ou la couche d'impression couleur (7) et/ou au-dessous de la ou des feuilles ou couches (5 et/ou 6) en polyester ou contenant du polyester au moins couche adhésive, couche d'accrochage ou feuille adhésive (4, 9) comme couche intermédiaire, qui est transparente et appauvrie en matières de charge (moins de 3 % en poids de matières de charge, de préférence moins de 1,5 % en poids de matières de charge) ou exempte de matières de charge.

12. Feuille stratifiée thermoformable pour meubles selon l'une ou plusieurs des revendications 1 à 11, **caractérisée en ce que** la couche ou couche d'accrochage en matière plastique ou résine synthétique placée au-dessus de la feuille inférieure ou couche inférieure (2) de la feuille en plastique contient ou est composée d'un produit réactionnel formé par un polyacrylate réticulable contenant des groupes OH, associé à un polyisocyanate, de préférence diisocyanate d'hexaméthylène, et/ou d'un alliage ou mélange composé d'un ou plusieurs de ces composés.

13. Feuille stratifiée thermoformable pour meubles selon l'une ou plusieurs des revendications 1 à 12, **caractérisée en ce qu'**il est utilisé pour la couche adhésive (3) ou est contenu dans la couche adhésive un polyacrylate contenant des groupes OH avec 1,5 à 5 % en poids de groupes OH (par rapport au polyacrylate contenant des groupes OH) et/ou **en ce que** le polyisocyanate a une proportion ou teneur en isocyanate de 1 à 5 % en poids (par rapport au produit réactionnel total) ou **en ce que** la couche adhésive (3) est réalisée à l'aide de ces composants.

14. Feuille stratifiée thermoformable pour meubles selon l'une ou plusieurs des revendications 1 à 13, **caractérisée en ce que** la ou les feuilles ou couches (5 et/ou 6) en polyester ou contenant du polyester sont transparentes ou translucides, contiennent 0 à 8 % en poids de matière de charge (par rapport à l'ensemble des couches ou feuilles (5 et/ou 6) en polyester), de préférence pas de matière de charge, et ont une épaisseur de couche de 20 à 250 µm, de préférence 50 à 200 µm (par rapport à l'épaisseur de couche totale de (5 et/ou 6) ) et/ou **en ce qu'**une au moins ou l'ensemble des feuilles ou couches (5 et/ou 6) en polyester ou contenant du polyester ont un point de ramollissement de Vicat VST/A/50 compris entre 60 et 90°C.

15. Feuille stratifiée thermoformable pour meubles selon l'une ou plusieurs des revendications 1 à 14, **caractérisée en ce que** la couche adhésive, couche d'accrochage (4) contient comme liant un polyuréthane (PUR), un polyisocyanate, un homopolymère, copolymère ou terpolymère de chlorure de vinyle et/ou polyvinylacétate et/ou un copolymère de chlorure de vinyle et d'acétate de vinyle (copolymère PVC/PVA) ou un mélange de deux ou plusieurs de ces matières plastiques.

16. Feuille stratifiée thermoformable pour meubles selon l'une ou plusieurs des revendications 1 à 15, **caractérisée en ce que** la couche inférieure ou feuille inférieure (2) contient un terpolymère de propylène avec une teneur en butène, hexène ou octène de 2 à 30 % en poids, de préférence 8 à 20 % en poids.

17. Feuille en matière plastique selon l'une ou plusieurs des revendications 1 à 16, **caractérisée en ce qu'**il est appliqué soit directement au-dessous de la feuille inférieure ou couche inférieure (2) soit au-dessous de la couche adhésive, couche d'accrochage ou couche réactive (3) placée sous celle-ci, une colle thermofusible à base de polyuréthane, polyamide, polyéthylène ou polypropylène en une épaisseur de couche de 30 à 200 µm.

18. Procédé de fabrication d'une feuille stratifiée thermoformable en plastique pour meubles, ou éléments de meuble fabriqués à partir de celle-ci, comprenant au moins une couche inférieure (2) ou feuille inférieure en polyoléfine ou contenant de la polyoléfine de 100 à 500 µm d'épaisseur, qui contient 0 à 90 parties en poids, par rapport à 100 parties en poids de polyoléfine, au moins d'une charge inorganique et/ou organique, d'un pigment ou d'un mélange chargelpigment et au moins un stabilisateur UV ainsi que les produits auxiliaires habituels et/ou un thermostabilisateur et/ou un antioxydant, au moins une couche intermédiaire sous la forme d'au moins une couche de primaire, couche adhésive (3) ou feuille adhésive (9), resp. couche adhésive, et, placée directement au-dessus de celle-ci ou au-dessus d'une couche d'impression, d'une couche couleur ou d'une couche d'impression couleur (7) déposée sur la totalité ou sur une partie de la surface et directement au-dessus de celle-ci ou au-dessus d'une couche adhésive (4), au moins une couche (5 et/ou 6) ou feuille à une ou plusieurs couches contenant du polyester, au-dessous de ladite feuille inférieure ou couche inférieure étant placée (côté matériau) au moins une couche adhésive, une couche d'accrochage ou une couche réactive (1), **caractérisé en ce qu'**on utilise comme couche inférieure ou feuille inférieure (2) contenant de la polyoléfine, un mélange de matière plastique contenant ou composé
(a) d'au moins un copolymère de propylène avec une teneur moyenne ou élevée en éthylène, de préférence un copolymère de propylène aléatoire, et/ou d'un terpolymère de propylène, qui possède(nt) un point de ramollissement de Vicat VST/A/50 compris entre 110 et 130°C ainsi qu'un indice de fluidité à chaud MFI (23012,16) de 1 à 10 g/10 min, et
(b) d'au moins un polyéthylène, de préférence LDPE, LLDPE, VLDPE et/ou VLLDPE, et
(c) d'au moins un élastomère de polyéthylène ou contenant du polyéthylène,
et **en ce qu'**on place une ou plusieurs couches ou feuilles (5, 6) en polyester ou contenant du polyester, dans au moins une couche en polyester ou couche ou feuille (5) contenant du polyester étant mis en oeuvre un polyester amorphe, et une au moins ou l'ensemble des couches ou feuilles en polyester ou contenant du polyester, étant réglé sur un point de ramollissement de Vicat VST/A/50 compris entre 60 et 90°C, et **en ce qu'**on dépose une couche de vernis (8) directement sur la couche en polyester ou couche ou feuille (5 et/ou 6) contenant du polyester.

19. Procédé selon la revendication 18, **caractérisé en ce qu'**on utilise comme élastomère de polyéthylène ou élastomère contenant du polyéthylène, dans la couche inférieure ou feuille inférieure (2), un élastomère de polyéthylène ou élastomère contenant du polyéthylène contenant du butène, de l'hexène ou de l'octène ou modifié avec du butène, de l'hexène ou de l'octène, qui possède un indice de fluidité à chaud MFI (190/2,16) de 3 à 8 g/10 min.

20. Procédé selon les revendications 18 et/ou 19, **caractérisé en ce qu'**on utilise comme LDPE, LLDPE, VLDPE et/ou VLLDPE, dans la couche inférieure (2), un LDPE, LLDPE, VLDPE et/ou VLLDPE contenant de l'octène ou modifié avec de l'octène, de préférence un LLDPE contenant de l'octène ou modifié avec de l'octène, et **en ce qu'**on utilise comme élastomère de polyéthylène ou élastomère contenant du polyéthylène contenant du butène, de l'hexène ou de l'octène ou modifié avec du butène, de l'hexène ou de l'octène un élastomère contenant du polyéthylène avec une teneur en butène, hexène ou octène de 10 à 35 % en poids, de préférence 20 à 30 % en poids (par rapport à 100 parties en poids d'élastomère).

21. Procédé selon l'une ou plusieurs des revendications 18 à 20, **caractérisé en ce qu'**on extrude et/ou coextrude la ou les couches inférieures ou feuilles inférieures (2) contenant de la polyoléfine, contenant ou composées d'un mélange (comme liant de résine synthétique) de 35 à 65 parties en poids, de préférence 45 à 55 parties en poids, de copolymère de propylène et/ou terpolymère de propylène (a) et de 20 à 40 parties en poids, de préférence 25 à 35 parties en poids, d'élastomère de polyéthylène ou contenant du polyéthylène contenant du butène, de l'hexène ou de l'octène ou modifié avec du butène, de l'hexène ou de l'octène (c) ainsi que de 10 à 30 parties en poids, de préférence 15 à 25 parties en poids, de LDPE, LLDPE, VLDPE et/ou VLLDPE (b) avec un MFI (190/2,16) de 2,5 à 7,5 g/10 min, de préférence LLDPE, en réglant au préalable le point de ramollissement de Vicat VST/A/50 d'une au moins ou de l'ensemble des couches ou feuilles inférieures (2) sur 70 à 80°C et/ou la sélection de l'indice de fluidité à chaud du copolymère de propylène MFI (230°/2,16) sur 2 à 8 g/10 min.

22. Procédé selon l'une ou plusieurs des revendications 18 à 21, **caractérisé en ce qu'**on réalise l'assemblage de la ou des couches ou feuilles en polyester ou contenant du polyester, de préférence des couches ou feuilles (5 et/ou 6), avec la feuille inférieure ou couche inférieure (2) contenant de la polyoléfine et le cas échéant la ou les couches ou feuilles (1, 7, 3 et/ou 9 ou 4) placées au-dessus, au-dessous ou entre celles-ci par contre-collage et/ou matriçage à des températures comprises entre 100 et 190°C, de préférence 110 et 180°C, ou par extrusion de plusieurs couches à des températures dans la masse comprises entre 230 et 270°C.

23. Procédé selon l'une ou plusieurs des revendications 18 à 22, **caractérisé en ce qu'**on soumet la face supérieure et/ou inférieure de la ou des couches inférieures ou feuilles inférieures, avant application de la couche adhésive ou couche d'accrochage ou couche réactive (3), à un traitement de surface pour activer la surface.

24. Procédé selon la revendication 23, **caractérisé en ce qu'**on réalise le traitement de surface sous forme de traitement Corona, de fluorisation, de traitement au plasma ou de traitement à la flamme.

25. Procédé de fabrication des éléments de meuble à l'aide de la feuille stratifiée pour meubles selon l'une ou plusieurs des revendications 18 à 24, **caractérisé en ce qu'**on applique la feuille stratifiée pour meubles par thermoformage à des températures comprises entre 80 et 140°C, de préférence 85 à 120°C et particulièrement préféré de 90 à 110°C, sur les éléments ou panneaux préfabriqués en bois ou matériau dérivé du bois ou contenant des fibres de bois et munis de la couche adhésive, couche d'accrochage ou couche réactive (1) placée au-dessous de la feuille inférieure ou couche inférieure (2), soit au moyen de la colle thermofusible appliquée selon la revendication 17 soit à l'aide d'un adhésif ou d'une colle, de préférence à l'aide d'un adhésif ou d'une colle à deux composants (PUR), et on l'assemble avec les éléments ou panneaux en bois ou matériau dérivé du bois.

26. Utilisation des feuilles stratifiées pour meubles, lesdites feuilles pour meubles ayant au moins la structure ou composition suivante :
une couche inférieure ou feuille inférieure (2) en polyoléfine ou contenant de la polyoléfine de 100 à 500 µm d'épaisseur, qui contient 0 à 90 parties en poids, par rapport à 100 parties en poids de polyoléfine, au moins d'une charge inorganique et/ou organique, d'un pigment ou d'un mélange charge/pigment et au moins un stabilisateur UV et/ou un thermostabilisateur et/ou un antioxydant, au moins
une couche intermédiaire (3 et/ou 9) sous la forme d'au moins une couche primaire, une couche adhésive ou feuille adhésive, et au-dessus de celle-ci
au moins une couche d'impression, une couche couleur ou une couche d'impression couleur (7) déposée sur la totalité ou sur une partie de la surface et, placée directement au-dessus de celle-ci ou au-dessus d'une ou de plusieurs couches adhésives ou feuilles adhésives (4, 9)
au moins une couche (5 et/ou 6) ou feuille à une ou plusieurs couches contenant du polyester, au-dessous de la feuille inférieure ou couche inférieure (2) étant placée une couche adhésive, couche d'accrochage ou couche réactivé (1) orientée vers le bois resp. vers le bois enduit d'adhésif, selon l'une ou plusieurs des revendications 1 à 15, **caractérisée en ce qu'**on utilise une feuille pour meubles pour fabriquer des éléments de meuble ou meubles munis de décors et qui pour recevoir les décors sont munis sur au moins une face, de préférence la face ou le panneau de décor frontal ou latéral, de reliefs et/ou de creux ou d'entailles, la feuille pour meubles présentant la structure ou la composition suivante :
au moins une couche inférieure ou feuille inférieure (2) contenant de la polyoléfine et qui contient au moins trois matières plastiques choisies parmi les groupes
a) au moins un copolymère de propylène, de préférence un copolymère de propylène aléatoire, avec une teneur moyenne ou élevée en éthylène, et/ou un terpolymère de propylène, qui possède(nt) un point de ramollissement de Vicat VST/A/50 compris entre 110 et 130°C ainsi qu'un indice de fluidité à chaud MFI (230/2,16) de 1 à 10 g/min, et
b) au moins un polyéthylène, de préférence un LDPE, LLDPE, VLDPE et/ou VLLDPE, ainsi que
c) au moins un élastomère de polyéthylène ou élastomère contenant du polyéthylène,
**en ce qu'**une au moins ou l'ensemble des couches inférieures ou feuilles inférieures (2) possède un point de ramollissement de Vicat VST/A/50 compris entre 60 et 90°C et **en ce qu'**on place une ou plusieurs couches ou feuilles (5, 6) en polyester ou contenant du polyester, parmi lesquelles ladite ou lesdites couches ou feuilles (5) en polyester ou contenant du polyester contiennent un polyester amorphe ou en sont constituées et au moins une ou l'ensemble des feuilles ou couches (5 et/ou 6) en polyester ou contenant du polyester possède un point de ramollissement de Vicat VST/A/50 compris entre 60 et 90°C.

27. Utilisation des feuilles stratifiées pour meubles selon les revendications 1 à 17 comme revêtement pour éléments ou panneaux en bois ou matériau dérivé du bois, plâtre cartonné, métal, éléments ou panneaux en métal.

28. Utilisation des feuilles stratifiées pour meubles selon la revendication 27 pour fabriquer des revêtements de porte, parquets stratifiés, boîtiers phono ou panneaux muraux.
